**Europäisches Patentamt**

**European Patent Office**

**Office européen des brevets**

(19)

(11) Veröffentlichungsnummer : **0 527 968 B1**

(12)

# EUROPÄISCHE PATENTSCHRIFT

(45) Veröffentlichungstag der Patentschrift :
**26.07.95 Patentblatt 95/30**

(51) Int. Cl.$^6$ : **G21C 19/30,** C01B 5/00,
**B01J 37/02**

(21) Anmeldenummer : **91920997.3**

(22) Anmeldetag : **09.05.91**

(86) Internationale Anmeldenummer :
**PCT/DE91/00379**

(87) Internationale Veröffentlichungsnummer :
**WO 91/18398 28.11.91 Gazette 91/27**

(54) **VORRICHTUNG FÜR DIE REKOMBINATION VON WASSERSTOFF UND SAUERSTOFF SOWIE VERWENDUNG DER VORRICHTUNG.**

(30) Priorität : **11.05.90 DE 4015228**

(43) Veröffentlichungstag der Anmeldung :
**24.02.93 Patentblatt 93/08**

(45) Bekanntmachung des Hinweises auf die
Patenterteilung :
**26.07.95 Patentblatt 95/30**

(84) Benannte Vertragsstaaten :
**BE CH DE ES FR LI NL SE**

(56) Entgegenhaltungen :
**EP-A- 0 301 536**
**DE-U- 9 000 830**
**PATENT ABSTRACTS OF JAPAN, Band 1, Nr.**
**111, 26. September 1977 & JP-A-52 075 657**

(73) Patentinhaber : **SIEMENS**
**AKTIENGESELLSCHAFT**
**Wittelsbacherplatz 2**
**D-80333 München (DE)**

(72) Erfinder : **HECK, Reinhard**
**Kurfürstenstrasse 43**
**D-6450 Hanau 1 (DE)**
Erfinder : **SCHWENK, Karl-Heinz**
**Hopfenstrasse 8**
**D-6450 Hanau (DE)**

**EP 0 527 968 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Rekombination von Wasserstoff und Sauerstoff mit Hilfe von Katalysatorkörpern, die auf ihrer Oberfläche eine katalytische Beschichtung tragen und über welche das den zu beseitigenden Wasserstoff enthaltende Gas-/Dampfgemisch leitbar ist, mit einem die Katalysatorkörper umgebenden und halternden Gehäuse.

Eine solche Vorrichtung ist durch die EP-A1 0 303 144 (1) bekannt. Dabei ist ein Katalysatorkörper in einem vertikal verlaufenden Rohr mit Abstand zur Rohrinnenwand angeordnet. Die Stirnseiten des Rohres sind mit druckabhängig und/oder temperaturabhängig öffnenden Verschlüssen versehen. Als Katalysatormaterial wird insbesondere Palladium oder Platin verwendet, wobei eine Rekombination bereits im Bereich nicht zündfähiger Wasserstoffkonzentrationen erfolgt. Obwohl ein solcher Zündvorgang als "kalte Zündung" bezeichnet wird, entsteht bereits eine Erwärmung. Diese ist indessen wesentlich geringer als bei einer sogenannten Abfackelung, d.h. einer offenen Verbrennung, wie sie z.B. in der DE-Al-30 04 677 (2) beschrieben ist. Demgegenüber hat eine gattungsgemäße Vorrichtung zur Rekombination von Wasserstoff und Sauerstoff den Vorteil, daß eine offene Verbrennung und ungerichtete Gaswolken auch dann vermieden werden, wenn eine katalytische Zündung (also nicht nur eine "kalte Zündung") erfolgt, d.h. eine zündfähige $H_2$-Konzentration im zuströmenden Gas-/Dampfgemisch erreicht ist, die zur internen Entflammung führt. Mit dieser bekannten Vorrichtung, die auch unter der Typenbezeichnung "Wasserstoffzünder WZK 88" bekannt ist - vgl. Siemens-Druckschrift Best.-Nr. Al9100-U822-A107 vom Mai 1988 (3a) - können durch sogenannte kalte Zündung nur relativ kleine Mengenströme einer Rekombination unterworfen werden; außerdem ist diese bekannte Vorrichtung aufgrund ihrer druckabhängig und/oder temperaturabhängig öffnenden Verschlüsse nicht dauernd mit der Containment-Atmosphäre eines Kernkraftwerks oder der Atmosphäre eines kerntechnischen Labors bzw. einer anderen Einrichtung, wo Wasserstoff entstehen kann, verbunden. Es kann also der Fall eintreten, daß die Vorrichtung schon arbeiten könnte, weil eine $H_2$-Konzentration unterhalb der Zündgrenze von z.B. 3 Vol.-% erreicht ist. Ihre Deckelverschlüsse sind jedoch noch geschlossen, weil die Auslösegrenzwerte von Druck- oder Temperatur noch nicht erreicht sind; erst nach dem Erreichen der Grenzwerte öffnen die Verschlüsse, und die Vorrichtung beginnt zu rekombinieren.

Der Erfindung liegt die Aufgabe zugrunde, ausgehend von der bekannten Vorrichtung zur Rekombination von Wasserstoff und Sauerstoff nach (1), diese so auszubilden, daß sie permanent für Rekombinationsvorgänge zur Verfügung steht und somit druckabhängig und/oder temperaturabhängig öffnende Verschlüsse zu ihrer Ingangsetzung nicht erforderlich sind, und daß wesentlich größere Mengenströme des Gas-/Dampfgemisches verarbeitet werden können.

Zur Lösung der gestellten Aufgabe ist Gegenstand der Erfindung eine Vorrichtung zur Rekombination von Wasserstoff und Sauerstoff mit Hilfe von Katalysatorkörpern, die auf ihrer Oberfläche eine katalytische Beschichtung tragen und über welche das den zu beseitigenden Wasserstoff enthaltende Gas-/Dampfgemisch leitbar ist, mit einem die Katalysatorkörper umgebenden und halternden Gehäuse, wobei das Gehäuse mindestens je eine permanent offene Gaseinlaßöffnung und eine permanent offene Gasauslaßöffnung aufweist, wobei diese Öffnungen über einen gehäuseinternen Gasströmungsweg miteinander kommunizieren, und wobei die Katalysatorkörper innerhalb des Gehäuses - der Gaseinlaßöffnung im Gasströmungsweg nachgeschaltet - angeordnet sind, mit den weiteren Merkmalen, daß die Katalysatorkörper aus mehrschichtigem Blech bestehende Flächenkörper sind, die in einer Multikanalanordnung eine Mehrzahl von einander parallel geschalteten Gasströmungskanälen bilden, deren Kanalquerschnitt durch wenigstens zwei mit Abstand einander benachbarte Flächenkörper bzw. - an den Enden der Multikanalanordnung - durch wenigstens einen Flächenkörper begrenzt ist, wobei die Flächenkörper jeweils aufweisen:

- ein Tragblech,
- eine poröse Haftvermittler-Oberflächenstruktur des Tragblechs in einer Stärke unter 10 μm,
- eine auf die Haftvermittler-Oberflächenstruktur aufgebrachte, oberflächen-vergrößernde, poröse Zwischenschicht, vorzugsweise aus $Al_2O_3$, welche eine ebenfalls im μm-Bereich liegende Schichtdicke hat,
- und eine auf die Zwischenschicht aufgebrachte Katalysator-Beschichtung, bestehend aus einem der beiden Edelmetalle Platin oder Palladium der VIII. Nebengruppe des Periodensystems, in derart feinverteilter Form, daß die Porosität der Zwischenschicht erhalten bleibt.

Vorteilhafte Weiterbildungen des Erfindungsgegenstandes sind in den Patentansprüchen 2 bis 28 angegeben.

Gegenstand der Erfindung ist auch eine vorteilhafte Verwendung einer Vorrichtung nach den Patentansprüchen 1 bis 28 zur betriebsmäßigen Beseitigung des Wasserstoffs, der sich im Containment eines Kernkraftwerks befindet oder bildet, wie im Patentanspruch 29 angegeben. Eine vorteilhafte Weiterbildung dieser Verwendung besteht nach Patentanspruch 30 darin, daß eine Vielzahl von Vorrichtungen zur Rekombination von Wasserstoff und Sauerstoff innerhalb des Containments des Kernkraftwerks an einer entsprechenden

EP 0 527 968 B1

Anzahl von Befestigungsorten über den Wand- und/oder Bodenbereich des Sicherheitsgebäudes netzartig verteilt montiert ist. Bei einem Standard-Druckwasser- Kernkraftwerk mit 1300 $MW_{el}$ Leistung und einem Containment- Volumen von ca. 70.000 m³ reichen ca. 50 Rekombinatoren nach der Erfindung in einer Baugröße von z.B. 1 m Breite mal 1 m Bauhöhe mal 140 mm Bautiefe aus.

Die mit der Erfindung erzielbaren Vorteile sind vor allem darin zu sehen, daß sich die Gehäusegeometrie der neuen Vorrichtung im Hinblick auf kleine Abmessungen bei möglichst hohem Rekombinationswirkungsgrad und geringen Herstellungskosten aufgrund des einfachen Aufbaus auf relativ einfache Weise optimieren läßt. Die Vorrichtung nach der Erfindung kann man auch als einen Flächenrekombinator bezeichnen, welcher sich als relativ kleiner Einheits-Modul in der Bauart eines Konvektors herstellen läßt. Demgemäß ist Gegenstand des Anspruchs 25 eine Vorrichtung, die zur Montage in Modulbauweise eingerichtet ist, indem eine Mehrzahl gleichartiger, zumindest in zwei Abmessungen, z.B. Tiefe und Höhe oder Tiefe und Breite, übereinstimmende Gehäuse nebeneinander oder übereinander zu einer Rekombinator-Flucht montierbar sind.

Als weitere wesentliche Vorteile des Erfindungsgegenstands sind folgende zu nennen: Es ist ein energieunabhängiger katalytischer Flächenrekombinator zur $H_2/O_2$-Rekombination geschaffen worden, der sich gemäß den Verwendungsansprüchen 29 und 30 hervorragend zur Montage innerhalb des Containments bzw. Sicherheitsbehälters eines Kernreaktors eignet und mit dem sich eine gefahrlose Beseitigung von $H_2$ in einer eventuellen Störfallatmosphäre erreichen läßt. Bei der Montage einer ausreichenden Anzahl von Vorrichtungen nach der Erfindung im Boden-, Wand- und Deckenbereich eines zu schützenden Volumens bzw. des Sicherheitsbehälters eines Kernkraftwerks können gesonderte Durchmischungseinrichtungen, die bisher für die Homogenisierung der Sicherheitsbehälter-Atmosphäre im Störfall zu sorgen hatten, entfallen. Das bisher verwendete System aus katalytischen $H_2$-Zündern nach der vorgenannten EP-Al 0 303 144 (1) und des $H_2$-Funkenzünders, wie er in der DE-Al-38 16 711 (3) (entsprechend PCT/EP 89/00 530) beschrieben ist, kann in vorteilhafter Weise ergänzt werden. Durch die erfindungsgemäße Vorrichtung mit ihren Flächenrekombinatoren können zwar nicht generell die Entstehung zündfähiger Gemische vermieden werden, es können jedoch die Auswirkungen von Zündungen dadurch vermindert werden, daß sie auch in dampfinerter Atmosphäre den $H_2$- und $O_2$-Gehalt reduziert. Im Extremfall können damit Verbrennungsvorgänge nach der Kondensation des Dampfes gänzlich verhindert werden.

Besonders vorteilhaft - im Rahmen eines dualen Konzepts - ist im Sicherheitsbehälter von Kernkraftwerken ein kombiniertes System, bestehend a) aus den Flächen-Rekombinatoren nach der Erfindung und b) den Wasserstoffzündern, Typ WZK 88 und WZB 88, wie sie in dem Siemens-Prospekt "Wasserstoffzünder", Bestell-Nr. A19100-U822-A107 vom Mai 1988 (3a) beschrieben sind. (a) arbeitet permanent und auch bei Dampfatmosphäre, (b) dient vor allem zur Beseitigung von größeren, kurzzeitig auftretenden $H_2$-Mengen. Dadurch ist es möglich, in Kernkraftwerken ein bisher verwendetes $H_2$-Durchmischungssystem und dazugehörige beheizte Flächenrekombinatoren (vgl. DE-A1 31 43 989) zu ersetzen.

Bei inertisierten Containments (als Inertgas wird z.B. $N_2$ eingeleitet) können nach einem Störfall durch Sauerstoffeintrag infolge von Radiolyse zündfähige Gemische entstehen. Bei Einbau von Flächenrekombinatoren gemäß der Erfindung entfällt jedoch hierbei die sonst notwendige $N_2$-Nachspeisung, die zu einem zusätzlichen Druckaufbau führt.

Vorteilhafte Wirkungen entfaltet die Vorrichtung nach der Erfindung auch beim Erhalt der Inertbedingungen in Sicherheitsbehälter-Druckentlastungssystemen, welche mit Naßwäschern arbeiten, in welchen ebenfalls infolge von Radiolysegasbildung zündfähige Gemische entstehen können.

Zum Stand der Technik ist noch zu verweisen auf die Rekombinationseinrichtung nach der DE-Al-22 39 952 (4), bei welcher die miteinander reagierenden beiden Gase $H_2$ und $O_2$ auf eine Reaktionstemperatur von mindestens 620 °C, vorzugsweise auf 760 °C aufgeheizt werden. Demgegenüber wird beim Erfindungsgegenstand eine Heizeinrichtung nicht benötigt bzw. bewußt darauf verzichtet. Der Erfindung liegt die durch Versuche gefundene Erkenntnis zugrunde, daß bei Verwendung von Palladium oder Platin als Katalysatormaterial eine Beheizung des zu behandelnden Gas-/Dampfgemisches nicht erforderlich ist und daß sich auch bei geringeren Konzentrationen, z.B. 1 % $H_2$, bereits Rekombinationsvorgänge an den katalytischen Flächenkörpern ergeben und mit diesen Vorgängen auch eine Temperatursteigerung an den Flächenkörpern. Diese Temperatursteigerung bzw. die Rekombinations-Arbeitstemperatur hängt von der $H_2$- und - unterhalb der stöchiometrischen Grenze - auch von der $O_2$-Konzentration ab. Bei größeren Konzentrationen, z.B. 8 % $H_2$, kann an den katalytischen Flächenkörpern die Zündtemperatur erreicht werden, jedoch verlaufen solche Zündvorgänge, weil ein kontinuierlicher Übergang von den Rekombinations- zu den Zündvorgängen erfolgt, nicht stoßartig, vielmehr erfolgt eine Verbrennung bei ruhiger Flamme.

Weiterhin ist zum Stand der Technik auf die EP-A2-0 233 564 (5) zu verweisen. Bei der in diesem Dokument behandelten Vorrichtung zur Beseitigung von Wasserstoff aus einem Wasserstoff enthaltenden Gasgemisch sind innerhalb eines verschließbaren Behälters Folien befestigt, deren Material die Wasserstoffbeseitigung bewirkt. Dieser Behälter ist normalerweise gegen die ihn umgebende Atmosphäre abgeschlossen. Um

3

EP 0 527 968 B1

die im Inneren des Behälters angeordneten Folien bei Bedarf zum Einsatz zu bringen, ist im Behälter ein mit Folien behafteter Trägerkörper derart angeordnet, daß sich die Folien nach Öffnen des Behälters in die Umgebung erstrecken. Die Entfernung des Wasserstoffs erfolgt im wesentlichen durch Adsorption; außerdem werden kleinere Mengen Wasserstoff in Anwesenheit von Sauerstoff im Gasgemisch oxidiert, wobei das Folienmaterial die Oxidation katalytisch beeinflußt. Es werden für den Aufnahmebereich des Wasserstoffs besondere Legierungen verwendet. Die zugrundeliegende Konzeption ist hierbei, eine offene Verbrennung des Wasserstoffs zu vermeiden, wobei auch Palladium als eine Beschichtung auf Vanadium als Katalysator verwendet wird, so daß partiell Wasserstoff auch zu Wasser direkt bei Temperaturen um 100 °C umgesetzt werden kann. Demgegenüber liegt der vorliegenden Erfindung das Konzept zugrunde, nur mit katalytischer Rekombination zu arbeiten und dabei auch (ruhig ablaufende) Verbrennungsvorgänge nicht auszuschließen. Zum Dokument (5) ist noch zu erwähnen, daß der darin beschriebene Sandwich-Folienaufbau insbesondere die Speicherung von $H_2$ im Metallgitter bewirken soll und daß die Herstellung derartiger Sandwich-Schichten sehr aufwendig und eine homogene Oberflächenstruktur nur unter Schwierigkeiten zu erreichen ist. Demgegenüber sind die katalytischen Flächenkörper nach der Erfindung einfacher aufgebaut, weil sie in bevorzugter Ausführung lediglich aus behandelten Edelstahlblechen mit Pd- und/oder Pt-Beschichtung zu bestehen brauchen.

Im folgenden seien die wesentlichen Vorteile des Erfindungsgegenstands noch einmal zusammengefaßt:
- Funktionsfähigkeit auch nach längerer Beaufschlagung mit Wasserdampf,
- Funktionsfähigkeit bleibt erhalten auch in der Gegenwart von chemischen Verunreinigungen, z.B. Jod, CO, $H_2BO_3$, Methyljodid, in dem zu behandelnden Gas-/Dampfgemisch,
- Funktionsfähigkeit der katalytischen Flächenkörper bzw. der gesamten Vorrichtung auch nach Abtauchen in Wasser,
- kompakte Bauform,
- sehr guter Kosten/Nutzen-Faktor, d.h. hohe $H_2$-Umsatzrate bei minimaler Katalysatorfläche,
- Funktionstüchtigkeit auch in Dampfatmosphäre.

Im folgenden werden anhand der Zeichnung, in welcher mehrere Ausführungsbeispiele nach der Erfindung dargestellt sind, weitere Merkmale und Vorteile des Erfindungsgegenstands näher erläutert. In der beigefügten Zeichnung zeigt:

FIG 1 in perspektivischer Darstellung eine erste, vereinfachte Ausführungsform einer Vorrichtung nach der Erfindung, im folgenden als Rekombinator bezeichnet;

FIG 2 in entsprechender Darstellung eine zweite verfeinerte Ausführung in Außenansicht,

FIG 3 den Gegenstand nach Figur 2, wobei ein unterer Gehäuseeinschub, enthaltend die katalytischen Flächenkörper, herausgezogen ist,

FIG 4 schematisch, die Frontansicht auf einen vereinfacht dargestellten Rekombinator mit drei übereinander angeordneten Lagen von katalytischen Flächenkörpern,

FIG 5 die Ansicht von oben auf eine einzelne Flucht katalytischer Flächenkörper, welche in einen Einschub nach Figur 3 paßt, mit einem ersten Faltenabstand;

FIG 6 in entsprechender Darstellung zu Figur 5 eine einzelne Flucht von katalytischen Flächenkörpern mit einem im Vergleich zu Figur 5 verkleinerten Faltenabstand,

FIG 7 den Einschub nach Figuren 5 und 6, versehen mit katalytischen Flächenkörpern mit einem im Vergleich zu Figur 6 weiter verkleinerten Abstand und ausgeführt als karteikartenartig einschiebbare Einzelbleche, die festgespannt werden können;

FIG 8 ein sogenanntes Dreistoff-Diagramm zur Verdeutlichung der Zündgrenzen für Wasserstoff-Luft-Dampf-Gemische, wobei auf der unteren Achse (Basis des Dreiecks) von rechts nach links fortschreitend die Wasserstoff-Konzentration in Vol-% aufgetragen ist, auf der in Uhrzeigerrichtung daran anschließenden Luft-Konzentrationsachse die Luftkonzentration in Vol-% und auf der dritten Dreiecksseite dementsprechend die Wasserdampfkonzentration in Vol-%, wobei auf allen drei Achsen der gesamte Prozentbereich von 0 bis 100 % aufgetragen ist, und

FIG 9 eine Tabelle, welche die $H_2$-Rekombinationsrate an einem katalytischen Flächenkörper von 46 cm² wirksamer Oberfläche verdeutlicht, wobei in den 5 Spalten in ihrer Reihenfolge von links nach rechts die folgenden physikalischen Größen eingetragen sind:
1. Zeit in Minuten, 2. Wasserstoffkonzentration $CH_2$ in Vol.-Prozent, 3. Strömungsgeschwindigkeit $VH_2$ des Wasserstoffs in Liter/min, 4. Konzentration $CH_2$ des Wasserstoffs in Vol.-Prozent (Zwischenwerte zu Spalte 2), 5. Strömungsgeschwindigkeit des zuströmenden, zu behandelnden Gases $V_{gas}$ in Liter/min,

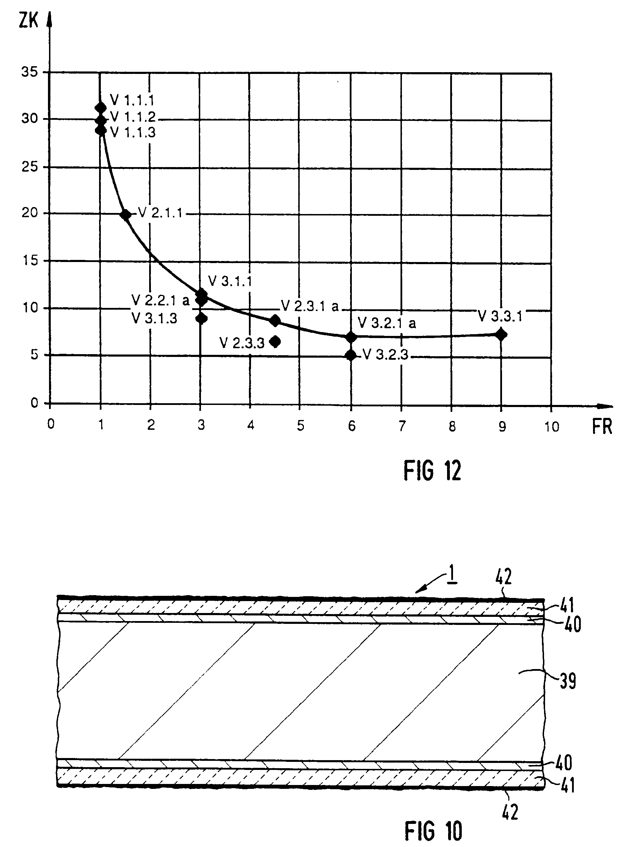

FIG 10 den vergrößerten Schnitt durch einen Flächenkörper, wobei die äußeren Schichten der besseren Erkennbarkeit wegen in ihrer Dicke größer als in Wirklichkeit dargestellt sind,

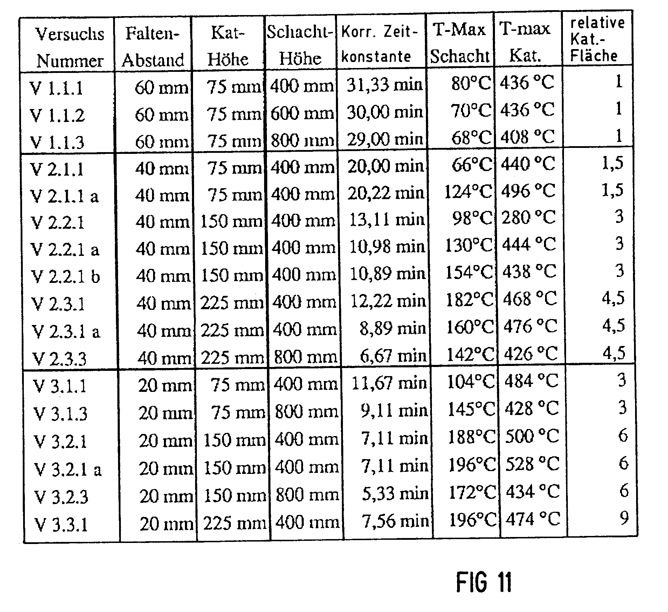

FIG 11 eine Tabelle, in welcher die wesentlichen Versuchsergebnisse für verschiedene Versuchsanordnungen der Nr. V1.1.1, V1.1.2 usw. (Spalte 1) eines Rekombinatortests dargestellt sind. Und zwar sind eine korrigierte Zeitkonstante, die maximale Temperatur T-max im Gasströmungsweg ("Schacht") des Rekombinators und die maximale Temperatur T-max der Flächenkörper (Spalten 5 bis 7) in Abhängigkeit von charakteristischen Parametern des Rekombinators (siehe Spalten 2 bis 4 sowie 8) eingetragen. Bei diesen charakteristischen Parametern handelt es sich um den Faltenabstand zickzack-Band-förmiger Flächenkörper, um die Höhe der Flächenkörper ("Katalysatorhöhe") und um eine relative oder normierte Katalysatorfläche, und

FIG 12 ein Diagramm, in welchem der Verlauf der Zeitkonstante ZK nach Spalte 5 von Figur 11 in Abhängigkeit von der relativen Katalysatorfläche FR (Spalte 8 von Figur 11) dargestellt ist, wobei die einzelnen Versuchsanordnungen mit V1.1.1, V1.1.2 usw. entsprechend der Tabelle nach Figur 11 bezeichnet sind.

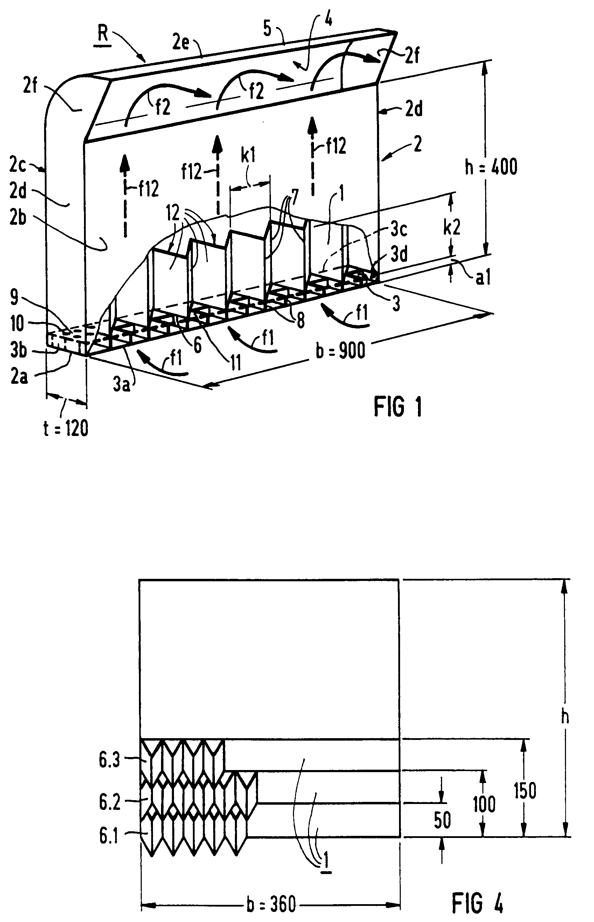

Die in Figur 1 dargestellte Vorrichtung zur Rekombination von Wasserstoff und Sauerstoff, im folgenden als Rekombinator R als Ganzes bezeichnet, arbeitet mit katalytischen Flächenkörpern 1, über welche das den zu beseitigenden Wasserstoff enthaltende Gas-/Dampfgemisch, siehe Strömungspfeile f1 (Zuströmung) und Strömungspfeile f2 (Abströmung) leitbar ist. Es kann sich bei den Flächenkörpern 1 um ein metallisiertes Plastikband (bzw. Plastikplatte oder -leiste) handeln, wobei auf eine solche Trägerschicht dann noch ein Beschichtung des Katalysatormaterials, insbesondere Platin oder Palladium, aufgebracht ist. Bevorzugt, weil robuster, bestehen die katalytischen Flächenkörper indessen aus Blech, insbesondere einem vorbehandelten korrosionsbeständigen Stahlblech, welches dann mit der katalytisch wirkenden Außenschicht (insbesondere Pt oder Pd) beschichtet ist. Die Flächenkörper 1 sind in einem als Ganzes mit 2 bezeichneten Gehäuse gehaltert und werden von diesem Gehäuse so umgeben, daß sich eine kaminartige Gasströmung, wie es die Strömungspfeile f1, f12 und f2 verdeutlichen, ausbilden kann. Hierzu weist das Gehäuse 2 mindestens je eine permanent offene Gaseinlaßöffnung 3 in der Nähe seines Gehäusebodens 2a, vorzugsweise nach unten gerichtet, auf und ferner eine permanent offene Gasauslaßöffnung 4 im oberen Bereich des Gehäuses 2, welche im wesentlichen zur Frontseite des Gehäuses 2 orientiert ist. Wie man erkennt, sind nun die katalytischen Flächenkörper 1 innerhalb des Gehäuses 2 - und zwar der Gaseinlaßöffnung 3 im Gasströmungsweg 11 nachgeschaltet - angeordnet.

Das Gehäuse 2 ist im wesentlichen quaderförmig ausgebildet. Es hat im dargestellten Beispiel (bezogen auf seine Innenabmessungen) eine Tiefe t von 120 mm, eine Breite b von 900 mm und eine Höhe h von 800 mm. Man kann deshalb sagen, daß das Gehäuse 2 etwa die Abmessungen eines Raumheizkörpers hat, wobei seine front- und rückseitigen Wände 2b, 2c in ihrer Breite b und ihrer Höhe h ein Mehrfaches des Tiefenmaßes t seiner Mantelwände betragen. Die Mantelwände werden gebildet durch die Bodenwand 2a, die beiden Seitenwände 2d und eine als gewölbte Leitwand ausgebildete deckseitige Wand 2e mit entsprechend geformten Stirnwandteilen 2f, welche in der gleichen Ebene liegen wie die Seitenwände 2d und mit dieser jeweils einstückig sind. Die Leitwand 2e wirkt als Strömungsleitblech, welches bei nicht übereinstimmenden Richtungen der Gasauslaßöffnung 4 und der gehäuseinternen Gasströmung - siehe die aufwärts gerichteten, durch gestrichelte Strömungspfeile f12 symbolisierten Gasströme - letztere in Richtung der Gasauslaßöffnung 4 umlenkt, siehe Strömungspfeile f2. Die gehäuseinterne Gasströmung ist damit etwa um den Winkel von 90° aus der Vertikalen in die Horizontale umgelenkt. Die Gasauslaßöffnung wird gebildet durch die offene Seite einer Haube 5, zu welcher die beiden Stirnwände 2f und die gewölbte, auf der Innenseite konkave Leitwand 2e gehören. Das Gehäuse 2 ist bevorzugt ein Blechgehäuse, welches durch Zusammenschweißen seiner einzelnen Gehäusewände 2a-2f hergestellt wird.

Die katalytischen Flächenkörper 1 werden gebildet durch ein wellenförmig verlaufendes Blechband 6, wobei die Wellenberge und Wellentäler des Bandes 6 vorzugsweise sowohl der Frontseite (Frontwand 2b) als auch der Rückseite (Rückwand 2c) zugewandt sind. Das Blechband 6 verläuft insbesondere zickzack-förmig, wobei zu seiner Herstellung zweckmäßigerweise ein ebenes Band mit Faltungszonen 7 in Form von Sicken versehen und die endgültige Wellen- oder Zickzackform durch Faltung längs der Faltungszonen 7 hergestellt ist. Der Faltenabstand von Spitze zu Spitze ist mit k1 bezeichnet. Für die reaktive Beschichtung dieses Blechbands 6 gilt das eingangs Gesagte: diese besteht aus einer dünnen Schicht im um-Bereich aus insbesondere Platin und/oder Palladium. Im übrigen wird der mehrschichtige Aufbau der Flächenkörper weiter unten noch näher erläutert. Das Blechband 6 ist beidseitig mit Katalysatormaterial unter Bildung von Reaktionsflächen beschichtet, so daß das über die Gaseinlaßöffnung 3 eintretende Gas-/ Dampfgemisch sowohl über die frontseitigen als auch über die rückseitigen Reaktionsflächen des Blechbandes strömen kann. Die Gaseinlaßöffnung 3 wird durch vier Öffnungsränder 3a bis 3d begrenzt, welche der Gaseinlaßöffnung 3 die Gestalt eines langgestreckten Rechtecks bzw. Schlitzes geben. Dieser Schlitz läßt das Gas-/Dampfgemisch sowohl zu den Frontseiten als auch zu den Rückseiten des Blechbands 6 strömen. Die Strömungsgleichrichtung bei schräger Anströmung von unten wird gewährleistet durch eine Leitblechanordnung 8 geringer Höhe a1, auf welcher das Blechband 6 aufsteht. Die Leitblechanordnung 8 ist insbesondere als ein im Bodenbereich des Gehäuses 2 befestigter (insbesondere verschraubter) Lichtgitterrost ausgeführt. Alternativ zum Lichtgitterrost könnte auch eine Siebplatte 9 vorgesehen sein, mit Sieböffnungen, wobei jedoch die Wirkung der Strömungsgleichrichtung nicht so gut ist wie beim Lichtgitterrost. Der besseren Übersichtlichkeit wegen ist die Siebplatte 9 nur in einem Teilbereich des Gehäuses 2 dargestellt. Front- und Rückseite des Blechbands 6 werden also beide umströmt und tragen so in etwa gleichem Maße zur katalytischen Rekombination des in dem eintretenden Gemischstroms enthaltenen Wasserstoffs mit dem darin gleichfalls enthaltenen Sauerstoff bei.

Durch das Blechband 6 werden also eine Vielzahl von katalytischen Flächenkörpern 1 rechteckigen Grundrisses gebildet, die sowohl auf ihrer Frontseite als auch auf ihrer Rückseite mit einer katalytischen Beschichtung 12 versehen sind. Man erkennt, daß der vom Blechband 6 bzw. seinen einzelnen Flächenkörpern 1 auf deren Vorder- und Rückseiten gebildete Gasströmungsweg 11 eine Multikanalanordnung darstellt, welche eine Mehrzahl von einander parallel geschalteten Gasströmungskanälen 11.1 auf der Vorderseite und 11.2 auf der Rückseite umfassen, deren - im dargestellten Falle - dreieckförmiger Kanalquerschnitt durch wenigstens zwei mit Abstand zueinander benachbarte Flächenkörper 1 und die Innenseite einer zugewandten Gehäusewand, entweder 2b oder 2c, begrenzt wird. An den Enden des Blechbandes 6 bzw. der Multikanalanordnung ist der Kanalquerschnitt durch wenigstens einen Flächenkörper 1 und natürlich die angrenzenden Gehäusewände 2b, 2d, 2c (linkes und rechtes Ende in Figur 1) begrenzt. Es kann zweckmäßig sein, im Höhenbereich des Blechbandes die Innenseite der Gehäusewände 2b, 2d und 2c ebenfalls mit einer katalytischen Beschichtung zu versehen, um auf diese Weise die wirksame Katalysatorfläche des Rekombinators R zu vergrößern. Die gewünschte Kaminwirkung ist am größten, wenn der gehäuseinterne Gasströmungsweg 11, wie dargestellt, vertikal von unten nach oben gerichtet ist und die Flächenkörper 1 mit ihren Blechebenen ebenfalls vertikal in diesen gehäuseinternen Gasströmungsweg 11 ausgerichtet angeordnet sind.

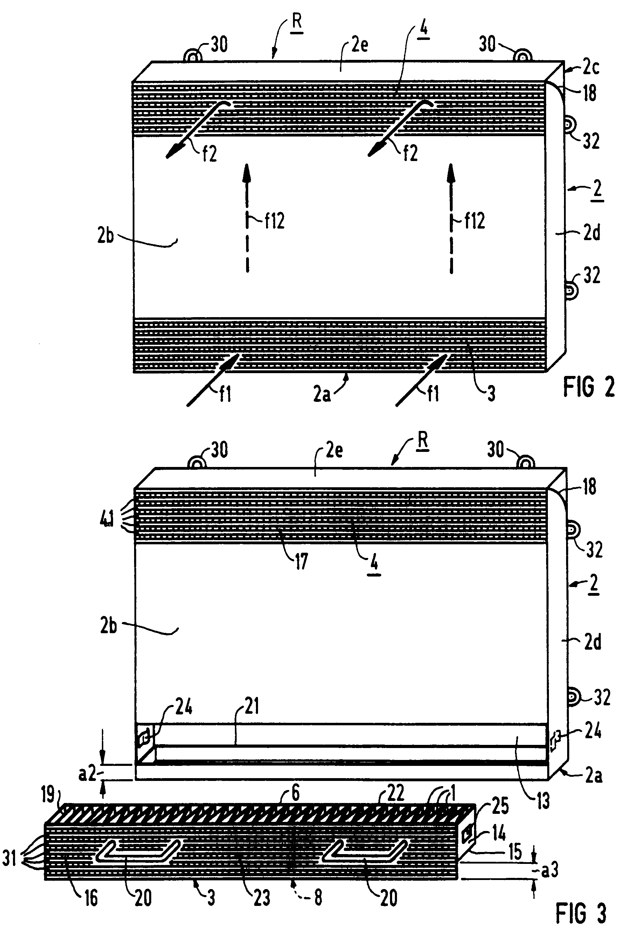

Beim zweiten Ausführungsbeispiel nach Figuren 2 und 3 bildet das Gehäuse 2 des Rekombinators R in seinem unteren Bereich eine Aufnahme 13 (Figur 3) für einen de- und remontablen Einschub 14. Dieser Einschub 14 weist die katalytischen Flächenkörper 1, die als Ganzes mit 3 bezeichnete Gaseinlaßöffnung und - zusammen mit dem Gehäuse 2 - ein Kanalsystem 15 zur Um- und Durchströmung der katalytischen Flächenkörper 1 mit dem zu behandelnden Gas-/Dampfgemisch auf. Die Gaseinlaßöffnung 3 ist wieder nach unten gerichtet (Gehäuse 2 nach unten offen). Die Gasauslaßöffnung 4 ist durch mehrere parallel zueinander verlaufende Längsschlitze 41 gebildet. Die Gaseinlaß- und Gasauslaßöffnungen 3 und 4 bzw. die Längsschlitze 41 sind jeweils durch ein feinmaschiges Drahtgitter 16 bzw. 17 abgedeckt, welches die Gasströmung praktisch nicht behindert und gegen das Eindringen von Fremdkörpern schützt. Die nach unten weisende Partie des Gitters 16 ist nicht zu sehen, sondern nur die frontseitige Partie des Gitters 16, welche die frontseitigen Schlitze 31 abdeckt. Abweichend vom Beispiel nach Figur 1 dient hier zur Umlenkung der vertikal nach oben strömenden Gemischströme ein gehäuseinternes, gewölbtes Leitblech 18, das in Figuren 2 und 3 so dargestellt ist, als wenn die rechte Seitenwand 2d durchsichtig wäre. Das Leitblech 18 erstreckt sich mit seiner konkaven Seite vom oberen Bereich der Rückwand- Innenseite des Gehäuses 2 nach oben und zur Frontseite hin zum vorderen Bereich der Innenseite der Deckwand 2e, so daß das bei vertikal verlaufendem internen Gasströmungsweg 11 aufsteigende Gas-/Dampfgemisch in die horizontale, zur Ausströmöffnung 4 hinweisende Richtung gelenkt wird (vgl. Strömungspfeile f2).

Figur 3 zeigt, daß an einem Ende des Einschubs 14 eine Mehrzahl von katalytischen Flächenkörpern 19 angeordnet ist, welche als Testkörper dienen und zu diesem Zweck aus der Gesamtanordnung der katalytischen Flächenkörper 1 des Einschubs 14 ohne Beeinträchtigung der übrigbleibenden Flächenkörper 1 herauslösbar sind. Zu diesem Zweck sind diese Testkörper 19 als kleine Blechplatten ausgeführt, welche karteikartenartig in Führungsschlitze an den Innenflächen des Einschubs 14 (in Figur 3 nicht dargestellt) eingefügt sind. Die Ausführung der übrigen Flächenkörper 1 ist im Prinzip so, wie anhand von Figur 1 dargestellt und erläutert. An dem einen Ende des Einschubs 14 sind beispielsweise vier Testkörper 19 eingefügt; ihre Abstände sind so, daß sich praktisch die gleiche Strömungsgeschwindigkeit und das gleiche Maß der Beaufschlagung wie für die übrigen Flächenkörper 1 ergibt, so daß nach einer bestimmten Betriebsdauer, z.B. ein Jahr, ein solcher Testkörper 19 entnommen und auf den Zustand seiner katalytischen Außenschicht untersucht werden kann. Zur besseren Handhabbarkeit des Einschubs 14 kann dieser mit Handgriffen 20 versehen sein, vorzugsweise in seinen beiden Endbereichen der Frontseite mit je einem Handgriff.

Das Kanalsystem 15 wird beim Ausführungsbeispiel nach Figuren 2 und 3 wie folgt gebildet: Auf der Innenseite der Bodenwand 2a des Gehäuses 2 ist in deren Randbereich ein umlaufender Rahmen 21 befestigt. Auf diesem sitzt der Einschub 14 mit einem Rahmenteil 22 im eingeschobenen Zustand auf. Der Rahmenteil 22 weist keinen Boden auf; er ist in Höhenrichtung um ein kleines Stück a3 kürzer als die Frontwand 23 des Einschubs 14. Diese Verkürzung a3 entspricht dem Maß a2 der Höhe des Rahmens 21 vollständig oder zumindest weitgehend. Der Rahmenteil 22, welcher an der Frontwand 23 des Einschubs 14 verschraubt oder verschweißt ist, dient zur Halterung der Flächenkörper 1 und der Testkörper 19; bodenseitig ist dieser Rahmenteil 22 ebenso wie das Gehäuse 2 offen. Im eingeschobenen Zustand (Figur 2) können mithin die zu behandelnden Gase/Dämpfe durch die Öffnung 3 zwischen die Flächenkörper 1 und die Testkörper 19 strömen, derart, daß die Körper 1, 19 von beiden Seiten durch die Gase/ Dämpfe umströmt werden können. Der Einschub 14 kann in seiner eingeschobenen Lage (Figur 2) durch eine Verrastung 24, 25 (oder Verschraubung) gesichert sein. Diese kann z.B. aus einer innerhalb der Aufnahme 13, an den Innenflächen ihrer Seitenflanken, befestigten gewölbten Blattfeder 24 und einer dazu passenden Rastausnehmung 25 an den Seitenflanken des Rahmenteils 22 bestehen. Im linken Teil des Einschubs 14 ist die Rastvertiefung 25 nicht zu erkennen, sondern nur im rechten Teil.

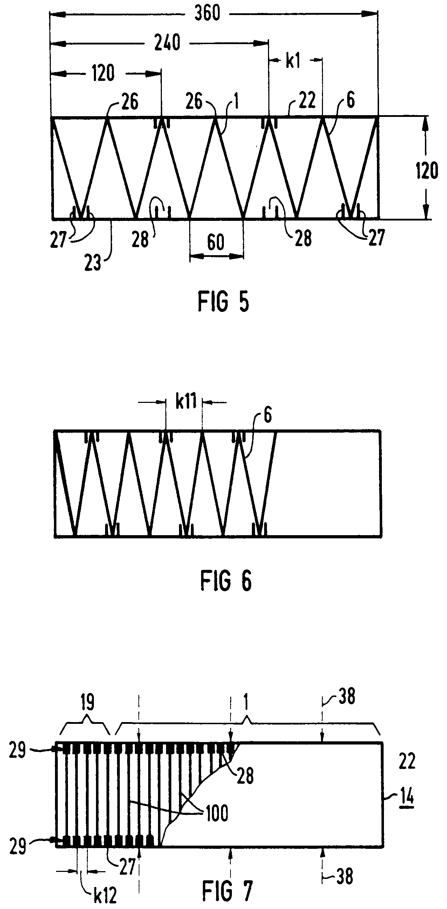

Figur 4 zeigt schematisch-vereinfacht, daß beim Beispiel nach Figur 1 die Flächenkörper 1 auch in mehreren Lagen übereinander angeordnet sein können. Jedes der zugehörigen Blechbänder 6.1, 6.2, 6.3 hat eine Höhe von z.B. 50 mm, so daß sich bei drei übereinander angeordneten Blechbändern eine Gesamthöhe von 150 mm ergibt. Die Faltung von einander benachbarten Blechbändern, also 6.1-6.2 oder 6.2-6.3, ist zweckmäßigerweise, wie perspektivisch-schematisch angedeutet, zueinander versetzt, so daß die eine Lage des Blechbands auf der unter ihr befindlichen jeweils stabil aufsitzt. Die Anzahl der übereinander angeordneten Flächenkörper 1 bzw. der zugehörigen Blechbänder hängt ab von der "Kaminhöhe", d.h. der Bauhöhe h des Rekombinators und/oder von der Durchströmungsgeschwindigkeit. Letztere kann auch ohne Vergrößerung der Kaminwirkung durch Einsatz von Gebläsen vergrößert sein.

Der dargestellten "eigensicheren" Ausführung, die ohne Gebläse auskommt, wird der Vorzug gegeben, weil sie passiv sicher ist, d.h. ohne Einschalten von Gebläsestrom auskommt.

Entsprechend der Schemazeichnung nach Figur 4 könnten beim Ausführungsbeispiel nach Figuren 2 und 3 anstelle eines einzigen Einschubs 14 auch deren zwei oder z.B. drei übereinander in entsprechende Aufnahmen 13 einschiebbar sein.

Um die wirksame Katalysatorfläche der Flächenkörper 1 jeder einzelnen Lage bzw. jedes Einschubs 14 zu vergrößern, empfiehlt es sich bei wellenförmiger oder zick-zack-förmiger Ausbildung der Flächenkörper 1, die Faltungsabstände zu verkleinern, wie dies in Figuren 5 und 6 verdeutlicht ist. In Figur 5 beträgt der Abstand k1 zwischen zwei einander benachbarten Spitzen 26 des Blechbands 6 60 mm bzw. zwischen jeder zweiten aufeinander folgenden Spitze des Blechbands 6 120 mm. Figur 5 zeigt, daß durch angepunktete oder auf andere geeignete Weise befestigte Blechleistenpaare 27 Führungsschlitze 28 an den Innenseiten der Frontwand 23 und an der rückseitigen Wand des Rahmenteils 22 gebildet werden, mit welchen die "Dachfirste" bzw. "Dachkanten" des gefalteten Blechbands 6 innerhalb des Gehäuses 2 bzw. Einschubs 14 fixiert werden können.

Figur 6 zeigt, daß durch Verringerung des Abstands der Führungsschlitze 28 und der zugehörigen Blechleisten die Faltungsdichte des Blechbands 6 erhöht werden kann. Der Faltenabstand k11 beträgt hier nur 40 mm.

Beim Ausführungsbeispiel nach Figur 7 ist die für die Testkörper 19 getroffene Halterung auch für die übrigen Flächenkörper 1 benutzt. Die Testkörper 19 und die Flächenkörper 1 bestehen beide aus insbesondere dünnwandigen, in einer Flucht aneinanderreihbaren Einzelplatten 100, vorzugsweise aus Einzelblechen, welche karteikartenartig in durch Führungsleistenpaare gebildete Führungsschlitze 28 einfügbar sind. Diese Ausführung hat den Vorteil, daß eine völlig gleichartige Ausbildung für die Testkörper und Flächenkörper gegeben ist. Durch eine nicht dargestellte Schraubverspannung können die Einzelplatten 100 innerhalb des Rahmenteils 22 bzw. des Einschubs 14 (vgl. Figur 3) unter elastischer Deformation schwingungssicher verspannt werden, wobei die Verspannkräfte auf den Rahmen z.B. in Richtung der Pfeile 38 wirken können.

Für die vorstehend beschriebenen Ausführungsbeispiele nach den Figuren 1 bis 7 gilt, daß man die Testkörper 19 zusätzlich dadurch gegen unerwünschte Entnahme sichern kann, indem man sie als dünnwandige, mittels Sollbruchstellen herausbrechbare Bleche ausbildet. Zum gleichen Zweck kann man die Testkörper 19 als längs Sollbruchlinien abreißbare Folien ausbilden. Zum Beispiel könnte man hierzu (siehe Figur 7) je einen kleinen Schweißpunkt oder eine Hartlötstelle 29 an beiden Seiten eines Testkörpers 19 vorsehen. Diese Fixierungen sind so schwach, daß sie beim Angreifen an einen Testkörper 19 mittels einer Zange und Zugbeanspruchung in Richtung nach oben zerstört werden. Es ist auch möglich, zur besonders schwingungs- und strömungssicheren Befestigung der übrigen Flächenkörper 1 diese zustätzlich mittels der geschilderten Schweißpunkte oder Hartlötstellen abzusichern. Der Abstand k12 benachbarter Einzelplatten 100 ist im Vergleich zu k1 oder k11 weiter verringert, z.B. auf 20 mm.

In Figuren 2 und 3 ist dargestellt, daß das Gehäuse 2 an seiner Rückwand mit Mitteln 30 zur hängenden Befestigung an einer vertikalen Gebäudewand versehen ist. Es handelt sich dabei z.B. um Befestigungsösen. Entsprechende Befestigungsösen können auch an den Seitenwänden vorgesehen sein; sie sind mit 32 bezeichnet.

In der bevorzugten Ausführungsform nach Figuren 2 und 3 ist der Rekombinator R hervorragend zur Montage in Modulbauweise eingerichtet, indem eine Mehrzahl gleichartiger, zumindest in zwei Abmessungen, z.B. Tiefe t und Höhe h oder Tiefe t und Breite b, übereinstimmende Gehäuse 2 nebeneinander oder übereinander zu einer Rekombinator-Flucht montierbar sind.

7

Die nach unten weisende Richtung der Gaseinlaßöffnung 3 und die frontseitige Orientierung der Gasauslaßöffnung 4 hat u.a. den Vorteil, daß die Belastung durch Staub minimiert ist (es sind keine nach oben orientierten Öffnungen vorhanden, durch welche der Gebäudestaub normalerweise bevorzugt eindringt). Zusätzlich könnten noch zur Frontseite gerichtete Gaseinlaßöffnungen in Form von Längsschlitzen 31 vorgesehen sein (Vergrößerung des Einströmquerschnitts), vgl. Figur 3.

Beim Rekombinator nach der Erfindung handelt es sich um eine Komponente, die bevorzugt zur betriebsmäßigen Beseitigung des Wasserstoffs, der sich im Containment eines Kernkraftwerks befindet oder bildet, geeignet ist. Im Zusammenhang mit der geschilderten Modulbauweise ergibt sich ein vorteilhaftes System von Rekombinatoren innerhalb eines Kernkraftwerks dadurch, daß eine Vielzahl solcher Rekombinatoren an einer entsprechenden Anzahl von Befestigungsorten über den Wand und/oder Bodenbereich des Sicherheitsgebäudes oder -behälters netzartig verteilt montiert ist.

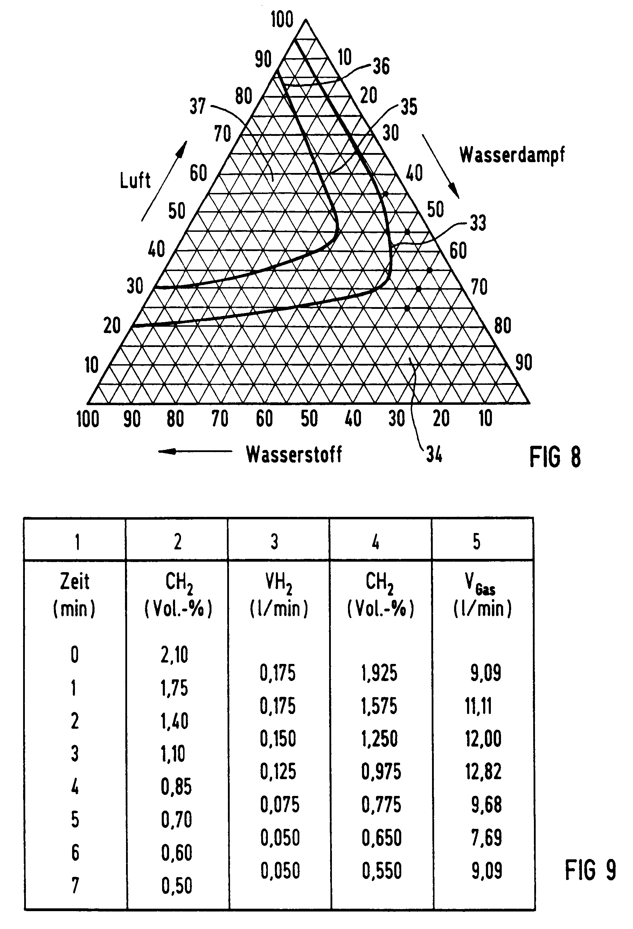

Figur 8 zeigt in einem Dreistoff-Diagramm die Zündgrenze 33, wobei in dem Feld 34 außerhalb dieser Zündgrenze 33 bereits Rekombinationsvorgänge, jedoch naturgemäß keine Zündvorgänge möglich sind. Im Feld 35 innerhalb der Zündgrenze 33 kann es zur Zündung des Wasserstoffs kommen, jedoch erfolgt diese nicht plötzlich, sondern in einem kontinuierlichen Übergang, weil der Rekombinator nach der Erfindung, bevor die Wasserstoffkonzentration die Zündgrenze überschreitet, bereits gearbeitet hat. Deshalb ist es auszuschließen, daß der Arbeitsbereich in das Feld 37 gelangt, welcher durch die sogenannte Detonationsgrenze 36 vom Feld 35 abgegrenzt ist.

Die Tabelle nach Figur 9 läßt erkennen, daß bei einem Test-Rekombinator mit einer wirksamen katalytischen Oberfläche von 46 cm$^2$ die mittlere Rekombinationsrate im Bereich von 2,1 Vol.- Prozent $H_2$ bis 1,1 Vol.-Prozent $H_2$ 0,166 Liter $H_2$/min beträgt.

Die Berechnungen in der Tabelle nach Figur 9 zeigen, daß die $H_2$-Rekombinationsrate mit sinkender $H_2$-Konzentration abnimmt, und außerdem, daß der Gasvolumenstrom, der sich infolge von Konvektion und Diffusion zu dem katalytischen Flächenkörper hinbewegt, im untersuchten Bereich nahezu konstant ist und im Mittel 10,2 liter/min beträgt. Daraus läßt sich ableiten, daß bei einer gegebenen Geometrie eines Rekombinators die Rekombinationsrate nur von der Schnelligkeit des Transports der Gasmoleküle zu den katalytischen Flächenkörpern abhängt und daß an diesen selbst unabhängig von der $H_2$-Volumenkonzentration immer eine 100 %-ige Rekombination stattfindet.

In Figur 10 ist ein Ausschnitt des aus mehrschichtigem Blech bestehenden Flächenkörpers 1, der für das Blechband 6 (Figuren 1, 3, 4, 5 und 6) und für die Testkörper 19 bzw. Einzelplatten 100 (Figuren 3 und 7) Verwendung finden kann, dargestellt. Danach besteht der katalytische Flächenkörper aus einem inneren Tragblech 39, vorzugsweise aus Edelstahl. In diesem Fall kann bereits eine hohe Stabilität der Flächenkörper 1 erreicht werden, wenn sie als relativ dünne Folien mit einer Dicke im Bereich zwischen 0,04 mm und 0,07 mm hergestellt werden. Ein günstiger Wert für die Gesamtdicke des Flächenkörpers einschließlich seiner beidseitigen Beschichtung 40 bis 42 liegt bei 0,05 mm. Er hat dann eine relativ kleine Wärmekapazität und heizt sich bei beginnenden Rekombinationsvorgängen schnell auf, was erwünscht ist. Unter Edelstahl wird korrosionsbeständiger Stahl verstanden. Auf das Tragblech 39 bzw. den Kern des Flächenkörpers 1 folgt als nächste Schicht eine poröse Haftvermittler-Oberflächenstruktur 40 des Tragblechs in einer Stärke unter 10 μm. Günstig ist ein Stärkenbereich für diese Oberflächenstruktur 40 im Bereich zwischen 1 bis 3 μm, also unter 5 μm. Sie kann dadurch hergestellt werden, daß der Aluminium als Legierungskomponente enthaltende Edelstahl wärmebehandelt wird, wodurch ein Teil des in der Legierung enthaltenen Aluminiums ausdiffundiert und mit dem Luftsauerstoff der Umgebung unter Bildung von $Al_2O_3$ reagiert. Es handelt sich dabei um Alpha-Aluminiumoxid; damit dieses nicht hygroskopisch (wasseranziehend) ist, darf es nur eine Rauhigkeit haben, aber keine Kapillaren. Diese Oberflächenstruktur 40 soll als poröser, grober Haftvermittler für die weitere Schicht 41 fungieren. Die rauhe Oberflächenstruktur kann anstelle einer Wärmebehandlung des Tragblechs 39 z.B. auch durch Sandstrahlen erzeugt werden; dann bildet sich kein $Al_2O_3$. Eine weitere Möglichkeit der Erzeugung einer Haftvermittler-Oberflächenstruktur 40 ist es, die Tragbleche 39 in Aluminiumfarbe zu tauchen, so daß an der Oberfläche verteilte Al-Feinstpartikel haften bleiben. Durch eine Wärmebehandlung wird dann das Lösungsmittel verdampft und das Aluminium oxidiert.

Auf das mit der Haftvermittler-Oberflächenstruktur 40 beidseits versehene Tragblech 39 wird anschließend eine oberflächenvergrößernde, poröse Zwischenschicht 41 aus $Al_2O_3$ aufgebracht, welche eine ebenfalls im μm-Bereich liegende Schichtdicke hat. Allgemein handelt es sich bei der Zwischenschicht um stabilisierte Aluminiumoxide. Anstelle der Aluminiumoxide wäre grundsätzlich auch Siliciumdioxid ($SiO_2$) geeignet. Die Beschichtungssuspension, welche durch Sprühen, Tauchen oder Streichen auf die Schicht 40 aufgebracht wird, enthält Aluminiumoxide und -hydroxide. Nach dem Aufbringen wird die Suspension getrocknet und wärmebehandelt; es erfolgt eine sogenannte Calcinierung unter Umwandlung in Gamma-Aluminumoxide. In der Suspension wirken die Aluminiumhydroxide als Binder. Das Ergebnis ist eine durchgehende keramische Zwischenschicht 41, die wasserabweisend ist. Ein bevorzugtes Flächengewicht dieser Zwischenschicht 41 beträgt 0,5 mg bis 5 mg/cm² (Washcode-Menge).

Auf die Zwischenschicht 41 wird dann das eigentliche Katalysator-Edelmetall, und zwar Platin oder Palladium - bevorzugt Platin -, aufgebracht und bildet die Katalysator-Beschichtung in derart feinverteilter Form, daß die Porosität der Zwischenschicht 41 erhalten bleibt und sich so eine sehr große katalytische Oberfläche ergibt. Platin oder Palladium gehören der VIII. Nebengruppe des Periodensystems an, zu der auch Nickel gehört. Es hat sich erwiesen, daß für das verhältnismäßig teuere Platin ein sehr geringes Gewicht pro Flächeneinheit innerhalb der äußersten Schicht 42 ausreicht. Dieses Gewicht pro Flächeneinheit liegt bevorzugt im Bereich zwischen 0,05 mg/cm² und 1,0 mg/cm². Die Katalysator-Beschichtung 42 ist auf diese Weise mit sehr kleiner Kristallgröße des Platins (oder Palladiums) oberflächlich in die Zwischenschicht 41 integriert. Die Katalysatorbeschichtung 42 ist durch eine verstärkte Linie mit unregelmäßigen "Bergen" und "Tälern" angedeutet, um die Oberflächenrauhigkeit zu symbolisieren. Beim Herstellen der Katalysator-Beschichtung 42 ist ein zweckmäßiges Vorgehen derart, daß das Platin in Chloroplatinsäure gelöst und diese Lösung auf die Zwischenschicht 41 z.B. aufgesprüht wird. Anschließend werden die flüchtigen Bestandteile des Lösungsmittels durch Aufheizen ausgetrieben, und das oxidierte Platin wird in Wasserstoffatmosphäre reduziert zum metallischen, feinkristallinen Platin.

Der so gewonnene Flächenkörper 1 mit seinem Kern 39 und der Beschichtung 40 bis 42 übersteht beim praktischen Einsatz in einem Rekombinator nicht nur Temperaturen seines normalen Arbeitsbereiches zwischen etwa 400 und 450° C, sondern sogar mittlere Temperaturen bis hinauf zu 850° C, ohne daß seine Katalysatorwirkung merklich beeinträchtigt würde. Da aber der Rekombinator R nach der Erfindung eine Komponente ist, die in einem Störfall bei $H_2$-Entwicklung auf jeden Fall zuverlässig arbeiten muß, so sind die bereits weiter oben erläuterten Inspektionen der Funktionstüchtigkeit der Flächenkörper 1 in regelmäßigen Abständen durch Entnehmen von Testkörpern 19 und Untersuchung auf ihre Funktionstüchtigkeit in einem Labor angezeigt. Unter regelmäßigen Zeitabständen ist z.B. eine Untersuchung alle drei Monate zu verstehen. Thermische Belastungsspitzen, die über 850° C hinausgehen, können die Flächenkörper kurzzeitig ebenfalls ohne Beeinträchtigung ihrer Funktion überstehen. Dies tritt z.B. bei der internen Entflammung auf, wenn die $H_2$-Konzentration die Zündgrenze einmal überschreiten sollte.

In Figur 11 sind in der Spalte 1 17 verschiedene Flächenkörper 1 bzw. Versuchschargen aufgelistet, die mit V 1.1.1, V 1.1.2, V 1.1.3 und so weiter bis V 3.3.1 bezeichnet sind. Die Tiefe der einzelnen Flächenkörper (in Figur 11 mit Katalysator bezeichnet) betrug bei allen Flächenkörpern t = 120 mm, so wie in Figur 1 oder 5 dargestellt. Dabei wurde die relative (normierte) Katalysatorfläche des dimensionslosen Wertes 1 einem Flächenkörper 1 zugeordnet, der innerhalb eines Blechbandes 6 (vgl. Figur 5) mit einem Faltenabstand k1 = 60 mm und mit einer Katalysatorhöhe k2 = 75 mm (vgl. Figur 1) ausgestattet war. Die Versuchschargen V 2.1.1 und V 2.1.1a haben demgegenüber eine vergrößerte relative Katalysatorfläche von 1,5, weil ihr Faltenabstand von 60 mm auf 40 mm verringert wurde. Die darauf folgenden Versuchschargen V 2.2.1 bis V 2.2.1b haben die relative Katalysatorfläche FR = 3, weil bei ihnen die Katalysatorhöhe von 75 mm auf 150 mm vergrößert wurde. Daran anschließend sind in der Tabelle nach Figur 11 drei Versuchschargen V 2.3.1 bis V 2.3.3 mit einer relativen Katalysatorfläche von 4,5 aufgelistet, weil bei ihnen die Katalysatorhöhe von 150 mm auf 225 mm vergrößert wurde. Es folgt ohne nähere Erklärung, daß bei den weiteren Versuchschargen V 3.1.1 und V 3.1.3 die relative Katalysatorfläche den Wert 3 hat, bei den Versuchschargen V 3.2.1 bis V 3.2.3 den Wert FR = 6 und bei der letzten Versuchscharge V 3.3.1 den Wert FR = 9. Den verschiedenen Versuchschargen wurden auch unterschiedliche Schachthöhen, identisch mit der internen Gasströmungsstrecke 11, zugeordnet; es wurden Schachthöhen mit Werten von 400 mm, 600 mm und 800 mm untersucht. In einer Versuchsstrecke wurden die unterschiedlichen Versuchschargen einem Gas-/Dampfgemisch, welches Wasserstoff von z.B. 4 Vol.-% enthielt, ausgesetzt, und es wurde die Zeitkonstante ZK gemessen, welche angibt, nach welcher Zeitspanne die $H_2$-Konzentration auf die Hälfte ihres ursprünglichen Wertes zurückgegangen ist. Man erkennt, daß bei der vorletzten Versuchscharge V 3.2.3 die kleinste Zeitkonstante ZK = 5,33 min gemessen wurde. In Spalten 6 und 7 sind noch die aufgetretenen Maximaltemperaturen T-max im Schacht (innerhalb der Gasströmungsstrecke 11) und der Flächenkörper eingetragen.

Figur 12 zeigt in einem Diagramm den Verlauf der Zeitkonstanten ZK in Minuten (Ordinatenachse) in Abhängigkeit von der relativen Katalysatorfläche FR (Abszissenachse), woraus man erkennt, daß die Versuchschargen V 2.3.3 mit ZK = 6,67 min und V 3.2.3 mit ZK = 5,33 min besonders günstige Werte, d.h. die relativ schnellste Rekombination, ergeben. Demgemäß besteht eine bevorzugte Ausführung der Erfindung darin, daß der Faltenabstand, der generell mit k1 bezeichnet wird, bei einem zick-zack-förmigen gefalteten Metallband für die Flächenkörper 1 bzw. der Abstand k12 von Einzelplatte zu Einzelplatte 100-100 (vgl. Figur 7) innerhalb einer Plattenflucht etwa 20 mm beträgt, daß die Höhe k2 der Flächenkörper 1 im Bereich von etwa 100 bis 200 mm liegt und daß die Schachthöhe h bzw. die Länge des gehäuseinternen Gasströmungswegs 11 im Bereich zwischen 500 und 1000 mm liegt. Ein bevorzugter Wert der Schachthöhe liegt bei 800 mm, wie in Figur 12 erkennbar, jedoch ist eine Vergrößerung der Schachthöhe auf 1000 mm in bezug auf die Zeitkonstante ohne wesentlichen Einfluß. Man erkennt aus Figur 12, daß die Zeitkonstante ZK mit zunehmender Katalysatorfläche etwa parabolisch abnimmt, sie durchläuft ein Minimum, um dann wieder anzusteigen. Dies ist dadurch zu erklären, daß bei nahezu 100-%-igem Wasserstoffausbrand in einem Testmodul bzw. der Versuchscharge ein weiterer Einsatz von Katalysatorfläche nur zur Erhöhung des Strömungswiderstandes führt. Eine Vergrößerung der Schachthöhe führt begrenzt zu einer Verbesserung der $H_2$-Abbaurate und gleichzeitig zu einer deutlichen Temperaturerniedrigung am Katalysator, wie es die Spalten 6 und 7 der Figur 11 verdeutlichen.

Es wurde gefunden, daß sich für die Berechnung der Zeitkonstanten ZK die folgende Näherungsgleichung angeben läßt:

$$ZK = \frac{0{,}1389 \text{ min/m}^3 \cdot V_{RSB}}{n} \cdot \sqrt{\frac{\rho_{RSB}}{1{,}18 \text{ kg/m}^3}} \text{ ,}$$

wobei

$$\rho_{RSB} = \frac{m_{RSB}}{V_{RSB}} \text{ .}$$

Hierin bedeuten

$V_{RSB}$ = Gasvolumen in einem Reaktorsicherheitsbehälter, gleichbedeutend mit dem Containment,

$\rho_{RSB}$ = mittlere Dichte des im Reaktorsicherheitsbehälters enthaltenen Gas-/Dampf-Gemisches,

$m_{RSB}$ = Masse des im Reaktorsicherheitsbehälter enthaltenen Gas-/Dampf-Gemisches und

$n$ = Anzahl der innerhalb des Reaktorsicherheitsbehälters installierten Rekombinatoren.

Diese berechnete Zeitkonstante ZK kann dann mit der anhand eines Testmoduls (vgl. Figur 11) ermittelten Zeitkonstante ZK verglichen werden, letztere wird deshalb korrigierte Zeitkonstante genannt.

Die durchgeführten Versuche haben ergeben, daß die Zeit zur Halbierung der Wasserstoffkonzentration in einem Behälter eine Konstante ist (Zeitkonstante ZK), welche von der Dichte $\rho_{RSB}$ im Behälter abhängig ist, wie es die Formel zeigt.

## Patentansprüche

1. Vorrichtung zur Rekombination von Wasserstoff und Sauerstoff mit Hilfe von Katalysatorkörpern (1), die auf ihrer Oberfläche eine katalytische Beschichtung (42) tragen und über welche das den zu beseitigenden Wasserstoff enthaltende Gas-/Dampfgemisch leitbar ist,
mit einem die Katalysatorkörper (1) umgebenden und halternden Gehäuse, wobei das Gehäuse (2) mindestens je eine permanent offene Gaseinlaßöffnung (3) und eine permanent offene Gasauslaßöffnung (4) aufweist, wobei diese Öffnungen über einen gehäuseinternen Gasströmungsweg (11) miteinander kommunizieren, und wobei die Katalysatorkörper (1) innerhalb des Gehäuses (2) - der Gaseinlaßöffnung (3) im Gasströmungsweg nachgeschaltet - angeordnet sind,
mit den weiteren Merkmalen,
daß die Katalysatorkörper (1) aus mehrschichtigem Blech (39-41) bestehende Flächenkörper sind, die in einer Multikanalanordnung eine Mehrzahl von einander parallel geschalteten Gasströmungskanälen bilden, deren Kanalquerschnitt durch wenigstens zwei mit Abstand einander benachbarte Flächenkörper bzw. - an den Enden der Multikanalanordnung - durch wenigstens einen Flächenkörper begrenzt ist, wobei die Flächenkörper jeweils aufweisen:
   - ein Tragblech (39),
   - eine poröse Haftvermittler-Oberflächenstruktur (40) des Tragblechs in einer Stärke unter 10 μm,
   - eine auf die Haftvermittler-Oberflächenstruktur aufgebrachte, oberflächen-vergrößernde, poröse Zwischenschicht (41), vorzugsweise aus $Al_2O_3$, welche eine ebenfalls im μm-Bereich liegende Schichtdicke hat,
   - und die auf die Zwischenschicht aufgebrachte Katalysator-Beschichtung (42), bestehend aus einem der beiden Edelmetalle Platin oder Palladium der VIII. Nebengruppe des Periodensystems, in derart feinverteilter Form, daß die Porosität der Zwischenschicht erhalten bleibt.

2. Vorrichtung nach Anspruch 1,
**gekennzeichnet durch** Platin als Katalysator-Beschichtung (42) mit einem Gewicht pro Flächeneinheit im Bereich zwischen 0,05 mg/cm² bis 1,0 mg/cm².

3. Vorrichtung nach Anspruch 1 oder 2,
**dadurch gekennzeichnet**, daß die Haftvermittler-Oberflächenstruktur (40) eine Stärke im Bereich zwischen 1 und 5 μm hat.

4. Vorrichtung nach einem der Ansprüche 1 bis 3,
**dadurch gekennzeichnet**, daß die Stärke der Zwischenschicht (41) im Bereich zwischen 5 und 20 µm liegt.

5. Vorrichtung nach einem der Ansprüche 1 bis 4,
**dadurch gekennzeichnet**, daß auch die Haftvermittler-Oberflächenstruktur (40) aus $Al_2O_3$ besteht.

6. Vorrichtung nach einem der Ansprüche 1 bis 5,
**dadurch gekennzeichnet**, daß der gehäuseinterne Gasströmungsweg vertikal von unten nach oben gerichtet ist und die Flächenkörper mit ihren Blechebenen ebenfalls vertikal im gehäuseinternen Gasströmungsweg ausgerichtet angeordnet sind.

7. Vorrichtung nach einem der Ansprüche 1 bis 6,
**dadurch gekennzeichnet**, daß das Gehäuse (2) quaderförmig ausgebildet ist und die Gaseinlaßöffnung (3) im Boden- oder unteren Bereich vertikal nach unten gerichtet, sowie die Gasauslaßöffnung (4) im oberen Bereich einer frontseitigen Wand (2b) des Gehäuses (2) angeordnet sind.

8. Vorrichtung nach Anspruch 6 oder 7,
**dadurch gekennzeichnet**, daß das Gehäuse (2) etwa die Abmessungen eines Raumheizkörpers hat und hierzu front- und rückseitige Wände (2b, 2c) aufweist, deren Breite (b) und Höhe (h) ein Mehrfaches des Tiefenmaßes (t) seiner Mantelwände (2a, 2d, 2e, 2f) beträgt.

9. Vorrichtung nach Anspruch 7 oder 8,
**dadurch gekennzeichnet**, daß das Gehäuse (2) in seinem unteren Bereich eine Aufnahme (13) für einen de- und remontablen Einschub (14) bildet und daß der Einschub die katalytischen Flächenkörper (1), die Gaseinlaßöffnung (3) und mit dem Gehäuse (2) ein Kanalsystem (15) zur Um- und Durchströmung der katalytischen Flächenkörper (1) mit dem zu behandelnden Gas-/Dampfgemisch aufweist.

10. Vorrichtung nach einem der Ansprüche 6 bis 9,
**dadurch gekennzeichnet**, daß der gehäuseinterne Strömungsweg (f1-f2) mit Leitwandanordnungen (2e,18,8) versehen ist, welche bei nicht übereinstimmenden Richtungen der Gaseinlaßöffnung (3) und der externen Anströmung (f1) bzw der Gasauslaßöffnung (4) und der gehäuseinternen Gasströmung (f1-f2) die Gasströmung parallel zu den Flächenkörpern (1) ausrichten bzw. in Richtung der Gasauslaßöffnung (4) umlenken.

11. Vorrichtung nach Anspruch 7 und 10,
**dadurch gekennzeichnet**, daß ein gewölbtes Leitblech (18) sich mit seiner konkaven Seite vom oberen Bereich der Rückwand-Innenseite (2c) zum vorderen Bereich der Deckwand- innenseite erstreckt, so daß das bei vertikal verlaufendem internen Gasströmungsweg aufsteigende Gas/Dampfgemisch in die horizontale, zur Ausströmöffnung hinweisenden Richtung gelenkt wird.

12. Vorrichtung nach Anspruch 10,
**dadurch gekennzeichnet**, daß auf der Anströmseite einer nach unten gerichteten Gaseinlaßöffnung (3) eine Leitwandanordnung (8) in Gestalt eines Lichtgitterrostes angeordnet ist, welcher schräg von unten anströmende Gase / Dämpfe parallel zu den katalytischen Flächenkörpern (1) ausrichtet.

13. Vorrichtung nach einem der Ansprüche 6 bis 12
**dadurch gekennzeichnet**, daß die Gasauslaßöffnung (4) durch mehrere parallel zueinander verlaufende Längsschlitze (41) gebildet ist.

14. Vorrichtung nach einem der Ansprüche 6 bis 13,
**dadurch gekennzeichnet**, daß die katalytischen Flächenkörper (1) jeweils aus einzelnen, insbesondere dünnwandigen, in einer Flucht aneinanderreihbaren Einzelplatten (100) bestehen.

15. Vorrichtung nach einem der Ansprüche 6 bis 13,
**dadurch gekennzeichnet**, daß die katalytischen Flächenkörper (1) jeweils aus einem wellenförmig verlaufenden Band (6) bestehen, wobei die Wellenberge und Wellentäler des Bandes der Frontseite bzw. der Rückseite (2b bzw. 2c) des Gehäuses (2) zugewandt sind.

16. Vorrichtung nach einem der Ansprüche 2 bis 15,

**dadurch gekennzeichnet**, daß die Einzelplatten (100) bzw. das Band (6) beidseitig mit Katalysatormaterial unter Bildung von Reaktionsflächen beschichtet sind, und das über die Gaseinlaßöffnung (3) eintretende Gas-/Dampfgemisch sowohl über die frontseitigen als auch über die rückseitigen Reaktionsflächen des Bandes (6) leitbar ist.

17. Vorrichtung nach Anspruch 15 oder 16,
**dadurch gekennzeichnet**, daß das Band (6) für den katalytischen Flächenkörper (1) zick-zack-förmig verläuft.

18. Vorrichtung nach einem der Ansprüche 15 bis 17,
**dadurch gekennzeichnet**, daß ein ebenes Band (6) mit Faltungszonen (7) in Form von Sicken versehen und die endgültige Wellen- oder Zickzackform durch Faltung längs der Faltungszonen (7) hergestellt ist.

19. Vorrichtung nach Anspruch 9 und einem der Ansprüche 14 bis 18, **dadurch gekennzeichnet**, daß wenigstens an einem Ende des Einschubs (14) eine Mehrzahl von katalytischen Flächenkörpern (1) angeordnet ist, welche als Testkörper (19) dienen und zu diesem Zweck aus der Gesamtanordnung der katalytischen Flächenkörper (19) des Einschubs (14) ohne Beeinträchtigung der übrigbleibenden Flächenkörper (1) herauslösbar sind.

20. Vorrichtung nach Anspruch 19,
**dadurch gekennzeichnet**, daß die Testkörper (19) als dünnwandige, mittels Sollbruchstellen herausbrechbare Bleche ausgebildet sind.

21. Vorrichtung nach einem der Ansprüche 14 bis 20,
**dadurch gekennzeichnet**, daß das Tragblech der Katalysatorkörper aus Edelstahl besteht und daß die Blechstärke für die Testkörper (19) und/oder Flächenkörper (1) im Bereich zwischen 0,04 mm und 0,07 mm, vorzugsweise bei 0,05 mm, liegt.

22. Vorrichtung nach einem der Ansprüche 14, 16 sowie 19,
**dadurch gekennzeichnet**, daß die Einzelplatten (100) und/oder die Testkörper (19) für den katalytischen Flächenkörper (1) aus rechteckigen Einzelblechen bestehen und der Einschub (14) in seinem Aufnahmebereich (13) für die Einzelplatten (100) bzw. Testkörper (19) mit Aufnahmeschlitzen (28) für die in diese karteikartenartig einschiebbaren Einzelbleche versehen ist.

23. Vorrichtung nach Anspruch 22,
**dadurch gekennzeichnet**, daß die Einzelplatten (100) und Testkörper (19) durch eine auf den Einschub (14) bzw. dessen Rahmenteil (22) von außen aufgebrachte mechanische Verspannung in ihren Führungsschlitzen mittels elastischer Deformation fixierbar sind.

24. Vorrichtung nach einem der Ansprüche 1 bis 23,
**dadurch gekennzeichnet**, daß die Gaseinlaß- und Gasauslaßöffnungen (3; 4) durch ein feinmaschiges Drahtgitter (16; 17) abgedeckt sind, welches die Gasströmung praktisch nicht behindert und gegen das Eindringen von Fremdkörpern schützt.

25. Vorrichtung nach Anspruch 9 und einem der Ansprüche 10 bis 19, **dadurch gekennzeichnet**, daß der Einschub (14) in seiner eingeschobenen Lage durch eine Verrastung (24, 25) oder Verschraubung gesichert ist.

26. Vorrichtung nach einem der Ansprüche 1 bis 25, **dadurch gekennzeichnet**, daß sie zur Montage in Modulbauweise eingerichtet ist, indem eine Mehrzahl gleichartiger, zumindest in zwei Abmessungen, z.B. Tiefe (t) und Höhe (h) oder Tiefe (t) und Breite (b), übereinstimmende Gehäuse (2) nebeneinander oder übereinander zu einer Rekombinator- Flucht montierbar sind.

27. Vorrichtung nach einem der Ansprüche 1 bis 26,
**dadurch gekennzeichnet**, daß der Faltenabstand (k1) eines zick-zack-förmigen gefalteten Metallbandes für die Flächenkörper bzw. der Abstand (k12) von Einzelplatte (100) zu Einzelplatte (100) bei einer Einzelplattenflucht in etwa 20 mm beträgt,
daß die Höhe (k2) der Flächenkörper im Bereich von etwa 100 bis 200 mm liegt und
daß die Schachthöhe (h) bzw. die Länge des gehäuseinternen Gasströmungsweges im Bereich zwischen 500 und 1000 mm liegt.

28. Vorrichtung nach Anspruch 27,
**dadurch gekennzeichnet**, daß die Schachthöhe (h) etwa 800 mm beträgt.

29. Verwendung der Vorrichtung nach einem der Ansprüche 1 bis 28, zur Beseitigung des Wasserstoffs, der sich im Containment eines Kernkraftwerks befindet oder bildet.

30. Verwendung nach Anspruch 29,
**dadurch gekennzeichnet**, daß eine Vielzahl von Vorrichtungen innerhalb des Containments des Kernkraftwerks an einer entsprechenden Anzahl von Befestigungsorten über den Wand- und/oder Bodenbereich des Sicherheitsbehälters netzartig verteilt montiert ist.

## Claims

1. Arrangement for recombining hydrogen and oxygen with the aid of catalyst bodies (1), which on their surfaces bear a catalytic coating (42) and by way of which the gas/vapour mixture containing the hydrogen which is to be removed can be conducted, having a housing which surrounds and supports the catalyst bodies (1), wherein the housing (2) has at least, in each case, one permanently open gas inlet opening (3) and one permanently open gas outlet opening (4), wherein these openings communicate with each other by way of a gas flow path (11) which is inside the housing, and wherein the catalyst bodies (1) are arranged inside the housing (2) - downstream of the gas inlet opening (3) in the gas flow path - the arrangement having the further features according to which the catalyst bodies (1) are flat bodies which consist of multi-layered sheet metal (39-41) and which in a multi-channel configuration establish a plurality of gas flow channels which are connected in parallel to each other and the channel cross-section of which is delimited by at least two flat bodies which are adjacent to each other with interspacing or - at the ends of the multi-channel configuration - by at least one flat body, wherein the flat bodies each have:
   - a metal support sheet (39),
   - a porous adhesion-promoting surface structure (40) of the metal support sheet of a thickness below 10$\mu$m,
   - a porous intermediate layer (41), preferably of $Al_2O_3$, which is applied to the adhesion-promoting surface structure, increases the surface area and has a layer thickness which likewise lies in the $\mu$m range,
   - and the catalyst coating (42) applied to the intermediate layer and consisting of one of the two noble metals platinum or palladium of the subgroup VIII of the periodic system in such finely dispersed form that the porosity of the intermediate layer is maintained.

2. Arrangement according to claim 1, characterised by platinum as the catalyst coating (42) having a weight per unit of area in the range from 0.05 mg/cm$^2$ to 1.0 mg/cm$^2$.

3. Arrangement according to claim 1 or 2, characterised in that the adhesion-promoting surface structure (40) has a thickness in the range between 1 and 5 $\mu$m.

4. Arrangement according to one of the claims 1 to 3, characterised in that the thickness of the intermediate layer (41) lies in the range between 5 and 20 $\mu$m.

5. Arrangement according to one of the claims 1 to 4, characterised in that the adhesion-promoting surface structure (40) also consists of $Al_2O_3$.

6. Arrangement according to one of the claims 1 to 5, characterised in that the gas flow path inside the housing is directed vertically from the bottom towards the top and the flat bodies are arranged with their sheet metal planes likewise vertically orientated in the gas flow path inside the housing.

7. Arrangement according to one of the claims 1 to 6, characterised in that the housing (2) is formed in the shape of a parallelepiped block and the gas inlet opening (3) is directed vertically downwards in the base or lower region and the gas outlet opening (4) is arranged in the upper region of a front wall (2b) of the housing (2).

8. Arrangement according to claim 6 or 7, characterised in that the housing (2) has substantially the dimensions of a space-heating body and for this has front and rear walls (2b, 2c), the width (b) and height (h) of which amount to a multiple of the depth (t) of its casing walls (2a, 2d, 2e, 2f).

9. Arrangement according to claim 7 or 8, characterised in that the housing (2) in its lower region forms a receptacle (13) for a drawer (14) which can be removed and re-installed and in that the drawer has the catalytic flat bodies (1), the gas inlet opening (3) and with the housing (2) a channel system (15) for circulating the gas/vapour mixture to be treated around and through the catalytic flat bodies (1).

10. Arrangement according to one of the claims 6 to 9, characterised in that the flow path (f1-f2) inside the housing is provided with baffle configurations (2e, 18, 8), which, when the directions of the gas inlet opening (3) and the external oncoming flow (f1) or the gas outlet opening (4) and the gas flow (f1-f2) inside the housing do not correspond, align the gas flow so that it is parallel to the flat bodies (1) or deflect it in the direction of the gas outlet opening (4).

11. Arrangement according to claim 7 and 10, characterised in that a curved baffle plate (18) extends with its concave side from the upper region of the rear wall inside (2c) to the front region of the cover wall inside so that the gas/vapour mixture, which rises with internal gas flow path extending vertically, is guided into the horizontal direction which points towards the outflow opening.

12. Arrangement according to claim 10, characterised in that arranged on the oncoming flow side of a gas inlet opening (3) directed downwards there is a baffle configuration (8) in the form of an egg crate decking which aligns gases/vapours, which are oncoming obliquely from below, in a direction parallel to the catalytic flat bodies (1).

13. Arrangement according to one of the claims 6 to 12, characterised in that the gas outlet opening (4) is formed by several longitudinal slits (4.1) extending parallel to each other.

14. Arrangement according to one of the claims 6 to 13, characterised in that the catalytic flat bodies (1) each consist of individual, in particular thinwalled, single plates (100) which can be mounted side by side in a row.

15. Arrangement according to one of the claims 6 to 13, characterised in that the catalytic flat bodies (1) each consist of a strip (6) extending in an undulating manner with the wave crests and wave troughs of the strip facing the front side and the rear side (2b and 2c) respectively of the housing (2).

16. Arrangement according to one of the claims 2 to 15, characterised in that the single plates (100) or the strip (6) are or is coated on both sides with catalyst material thus forming reaction surfaces and the gas/vapour mixture entering by way of the gas inlet opening (3) can be conducted both over the front reaction surfaces of the strip (6) as well as over the rear reaction surfaces of the strip (6).

17. Arrangement according to claim 15 or 16, characterised in that the strip (6) for the catalytic flat bodies (1) extends in a zigzag.

18. Arrangement according to one of the claims 15 to 17, characterised in that a planar strip (6) is provided with folding zones (7) in the form of creases and the final wave or zigzag form is produced by folding along the folding zones (7).

19. Arrangement according to claim 9 and one of the claims 14 to 18, characterised in that arranged at least at one end of the drawer (14) there is a plurality of catalytic flat bodies (1) which are used as test bodies (19) and to this purpose can be removed from the whole configuration of the catalytic flat bodies (19) of the drawer (14) without impairment of the remaining flat bodies (1).

20. Arrangement according to claim 19, characterised in that the test bodies (19) are formed as thin-walled metal sheets which can be broken out using predetermined breaking points.

21. Arrangement according to one of the claims 14 to 20, characterised in that the metal support sheet of the catalyst bodies consists of high-grade steel and in that the sheet thickness for the test bodies (19) and/or flat bodies (1) lies in the range between 0.04 mm and 0.07 mm, preferably at 0.05 mm.

22. Arrangement according to one of the claims 14, 16 and also 19, characterised in that the single plates (100) and/or the test bodies (19) for the catalytic flat bodies (1) consist of rectangular single sheets and the drawer (14) in its receiving area (13) for the single plates (100) or test bodies (19) is provided with receiving slits (28) for the single sheets which can be inserted into the latter in the manner of filing cards.

23. Arrangement according to claim 22, characterised in that the single plates (100) and test bodies (19) can be fixed in their guide slits by means of elastic deformation as a result of mechanical bracing applied from without to the drawer (14) or its frame portion (22).

24. Arrangement according to one of the claims 1 to 23, characterised in that the gas inlet opening and gas outlet opening (3; 4) are covered by a fine-meshed wire grating (16; 17) which does not substantially impede the gas flow and protects against the penetration of foreign bodies.

25. Arrangement according to claim 9 and one of the claims 10 to 19, characterised in that the drawer (14) is secured in its inserted position by means of a locating means (24, 25) or screw connection.

26. Arrangement according to one of the claims 1 to 25, characterised in that it is set up for modulestyle assembly as a plurality of similar housings (2) which correspond at least in two dimensions, for example depth (t) and height (h) or depth (t) and width (b), can be assembled side by side or one on top of the other to form a recombiner row.

27. Arrangement according to one of the claims 1 to 26, characterised in that the fold interspacing (k1) of a metal strip for the flat bodies folded in a zigzag shape or the interspacing (k12) from single plate (100) to single plate (100) in a row of single plates amounts to approximately 20 mm, in that the height (k2) of the flat bodies lies in the range of approximately 100 to 200 mm, and in that the shaft height (h) or the length of the gas flow path inside the housing lies in the range between 500 and 1000 mm.

28. Arrangement according to claim 27, characterised in that the shaft height (h) amounts to approximately 800 mm.

29. Use of the arrangement according to one of the claims 1 to 28, for the removal of the hydrogen which is located or formed in the containment of a nuclear power plant.

30. Use according to claim 29, characterised in that a plurality of arrangements is assembled within the containment of the nuclear power plant at a corresponding number of securing sites distributed over the wall and/or base area of the safety container in the manner of a network.


**Revendications**

1. Dispositif de recombinaison de l'hydrogène et de l'oxygène à l'aide de pièces (1) de catalyse qui portent sur leur surface un revêtement (42) catalyseur et sur lesquels le mélange gaz / vapeur contenant l'hydrogène à éliminer peut passer,

   ayant un boîtier entourant et maintenant les pièces (1) de catalyse, le boîtier (2) comportant au moins une ouverture (3) d'entrée de gaz ouverte en permanence et une ouverture (4) de sortie de gaz ouverte en permanence, ces ouvertures communiquant entre elles par un trajet (11) d'écoulement de gaz, interne au boîtier et les pièces (1) de catalyse étant disposés à l'intérieur du boîtier (2), l'ouverture (3) d'entrée de gaz étant en aval dans le trajet d'écoulement de gaz,

   ayant les caractéristiques complémentaires,

   que les pièces (1) de catalyse sont des pièces en forme de surface, consistant en tôle (39 à 41) à plusieurs couches, qui forment, dans un dispositif de canaux multiples, une multiplicité de canaux d'écoulement de gaz qui sont montés en parallèle, dont la section transversale de canal est délimitée par au moins deux pièces en forme de surface, voisines et placées à distance l'une de l'autre et - aux extrémités du dispositif de canaux multiples - par au moins une pièce en forme de surface, les pièces en forme de surface comportant chacune:
   - une tôle (39) support,
   - une structure (40) superficielle, à agent adhésif, poreuse, de la tôle support, en une épaisseur inférieure à 10 micromètres,
   - une couche (41) intermédiaire, poreuse, agrandissant la surface, de préférence en $Al_2O_3$, posée sur

la structure superficielle, à agent adhésif, ayant une épaisseur de couche également de l'ordre du micromètre,

- et le revêtement (42) catalyseur déposé sur la couche intermédiaire et consistant en l'un des deux métaux nobles platine ou palladium du VIIIème sousgroupe de la classification périodique, à l'état si finement réparti que la porosité de la couche intermédiaire est maintenue.

2. Dispositif suivant la revendication 1, caractérisé par du platine comme revêtement (42) catalyseur ayant un poids par unité de surface compris dans l'intervalle de 0,05 mg/cm$^2$ à 1,0 mg /cm$^2$.

3. Dispositif suivant les revendications 1 ou 2, caractérisé en ce que la structure (40) superficielle, à agent adhésif est d'une épaisseur comprise dans l'intervalle de 1 à 5 micromètres.

4. Dispositif suivant l'une des revendications 1à 3, caractérisé en ce que la couche (41) intermédiaire est d'une épaisseur comprise dans l'intervalle de 5 à 20 micromètres.

5. Dispositif suivant l'une des revendications 1 à 4, caractérisé en ce que également la structure (40) superficielle, à agent adhésif est en $Al_2O_3$.

6. Dispositif suivant l'une des revendications 1 à 5, caractérisé en ce que le trajet d'écoulement de gaz, interne au boîtier, est orienté verticalement de bas en haut et en ce que les pièces en forme de surface sont disposées orientées par leurs plans de tôle également verticalement dans le trajet d'écoulement de gaz interne au boîtier.

7. Dispositif suivant l'une des revendications 1 à 6, caractérisé en ce que le boîtier (2) a la forme d'un parallélépipède et en ce que l'ouverture (3) d'entrée de gaz est disposée orientée verticalement vers le bas, dans le fond ou dans la partie inférieure, tandis que l'ouverture (4) de sortie de gaz est disposée dans la partie supérieure d'une paroi (2b) du boîtier (2), du côté frontal.

8. Dispositif suivant les revendications 6 ou 7, caractérisé en ce que les dimensions du boîtier (2) sont environ celles d'un élément de chauffage des locaux et en ce qu'il comporte à cet effet des parois (2b, 2c) avant et arrière dont la largeur (b) et la hauteur (h) sont des multiples de la profondeur (t) de ses parois (2a, 2d, 2e, 2f) latérales.

9. Dispositif suivant les revendications 7 ou 8, caractérisé en ce que le boîtier (2) forme, dans sa partie inférieure, un logement (13) destiné à un tiroir (14) que l'on peut démonter et remonter et en ce que le tiroir comporte les pièces de catalyse (1), en forme de surface, l'ouverture (3) d'entrée de gaz et, conjointement avec le boîtier (2), un système (15) de canalisation servant à faire passer le mélange gaz / vapeur à traiter par les pièces (1) de catalyse, en forme de surface ou à les en détourner.

10. Dispositif suivant l'une des revendications 6 à 9, caractérisé en ce que le trajet (f1 à f2) d'écoulement, interne au boîtier est muni de dispositifs (2e, 18, 8) de parois de passage qui, lorsque les directions de l'ouverture (3) d'entrée de gaz et de l'afflux (f1) ou de l'ouverture (4) de sortie de gaz et de l'écoulement (f1 à f2) de gaz, interne au boîtier ne coincïdent pas, oriente l'écoulement de gaz parallèlement aux pièces (1) en forme de surface ou le détourne en direction de l'ouverture (4) de sortie de gaz.

11. Dispositif suivant les revendications 7 ou 10, caractérisé en ce qu'une tôle (18) de guidage, cintrée s'étend par sa face concave de la partie supérieure de la face (2c) intérieure de paroi arrière à la partie avant de la face intérieure, de la paroi de couverture, en sorte que, lorsque le trajet d'écoulement de gaz, interne s'étend verticalement, un mélange gaz / vapeur, ascendant est détourné dans la direction horizontale allant vers l'ouverture de sortie.

12. Dispositif suivant la revendication 10, caractérisé en ce qu'est disposé, sur la face d'afflux d'une ouverture (3) d'entrée de gaz, dirigée vers le bas, un dispositif (8) à parois de passage, ayant la forme d'un paralume, qui oriente, parallèlement aux pièces (1) de catalyse, en forme de surface, des gaz et des vapeurs affluant en biais depuis le bas.

13. Dispositif suivant l'une des revendications 6 à 12, caractérisé en ce que l'ouverture (4) de sortie de gaz est formée de plusieurs fentes longitudinales s'étendant parallèlement les unes aux autres.

14. Dispositif suivant l'une des revendications 6 à 13, caractérisé en ce que les pièces (1) catalytiques, en forme de surface consistent en plaques (100) uniques, notamment minces pouvant être rangées en alignement.

15. Dispositif suivant l'une des revendications 6 à 13, caractérisé en ce que les pièces (1) de catalyse, en forme de surface, consistent en un bande (6) ondulée, les sommets et les creux des ondulations de la bande étant tournés respectivement vers la face avant et la face arriére (2b et 2c) du boîtier (2).

16. Dispositif suivant l'une des revendications 2 à 15, caractérisé en ce que les plaques (100) uniques et la bande (6) sont revêtues, des deux côtés, de matériau catalyseur tout en formant des surfaces de réaction, et en ce que le mélange gaz / vapeur entrant part l'ouverture (3) d'entrée de gaz peut passer à la fois sur les surfaces de réaction avant et arriére de la bande (6).

17. Dispositif suivant les revendications 15 ou 16, caractérisé en ce que la bande (6) constituant les pièces (1) de catalyse, en forme de surface, s'étend en zig-zag.

18. Dispositif suivant l'une des revendications 15 à 17, caractérisé en ce qu'une bande (6) plane est munie de zones pliées en forme de moulure et en ce que la forme définitive ondulée ou en zig-zag est produite par pliage le long des zones de pliage.

19. Dispositif suivant la revendication 9 et l'une des revendications 14 à 18, caractérisé en ce que sont disposées en au moins une extrémité du tiroir (14) une multiplicité de pièces (1) de catalyse, en forme de surface qui servent de pièces (19) de vérification et qui peuvent être, dans ce but, détacher de tout le dispositif de pièces (19) de catalyse, en forme de surface du tiroir (14) sans que les pièces (1) en forme de surface, restantes n'en pâtissent.

20. Dispositif suivant la revendication 19, caractérisé en ce que les pièces (19) de vérification sont des tôles de paroi mince, détachables au moyen de points destinés à la rupture.

21. Dispositif suivant l'une des revendications 14 à 20, caractérisé en ce que la tôle support des pièces de catalyse est en acier fin et en ce que l'épaisseur de tôle des pièces (19) de vérification et / ou des pièces (1) en forme de surface est dans l'intervalle de 0,04 mm à 0,07 mm, de préférence de 0,05 mm.

22. Dispositif suivant l'une des revendications 14, 16, ainsi que 19, caractérisé en ce que les plaques (100) uniques et / ou les pièces (19) de vérification en ce qui concerne les pièces (1) de catalyse, en forme de surface sont en tôle unique, rectangulaire et en ce que le tiroir (14) est muni, dans sa partie de réception des plaques (100) uniques et des pièces (19) de vérification, de fentes (28) de réception des tôles uniques pouvant y être introduites comme des fiches.

23. Dispositif suivant la revendication 22, caractérisé en ce que les plaques (100) uniques et les pièces (19) de vérification peuvent être immobilisées dans leur fentes de guidage, au moyen d'une déformation élastique, par un blocage mécanique monté de l'extérieur sur le tiroir et sa pièce de cadre.

24. Dispositif suivant l'une des revendications 1 à 23, caractérisé en ce que, les ouvertures (3; 4) d'entrée et de sortie de gaz sont recouvertes d'une toile métallique (16; 17) à mailles fines qui ne fait pratiquement pas obstacle à l'écoulement du gaz et empêche des corps étrangers de pénétrer.

25. Dispositif suivant la revendication 9 et l'une des revendications 10 à 19, caractérisé en ce que le tiroir (14), lorsqu'il est en position rentrée, est bloqué par un encliquetage (24, 25) ou par un vissage.

26. Dispositif suivant l'une des revendications 1 à 25, caractérisé en ce qu'il est prévu pour un montage modulaire par le fait qu'une multiplicité de boîtier (2) du même genre, coincïdant au moins par deux dimensions, par exemple la profondeur (t) et la hauteur (h) ou la profondeur (t) et la largeur (b) peuvent être montés les uns à côté des autres ou les uns sur les autres en vue de former un alignement de dispositifs de recombinaison.

27. Dispositif suivant l'une des revendications 1 à 26, caractérisé en ce que la distance (k1) de pliage d'une bande métallique pliée en zig-zag des pièces en forme de surface et la distance (k12) d'une plaque (100) unique à une autre est d'environ 20 mm dans un alignement de plaques uniques,

en ce que la hauteur (k2) des pièces en forme de surface est dans l'intervalle de 100 à 200 mm environ,

en ce que la hauteur (h) de puits ou la longueur du trajet interne au boîtier, d'écoulement de gaz est dans l'intervalle de 500 à 1000 mm environ.

28. Dispositif suivant la revendication 27, caractérisé en ce que la hauteur (h) de puits est d'environ 800 mm.

29. Utilisation du dispositif suivant l'une des revendications 1 à 28 pour éliminer l'hydrogène qui se trouve ou qui se forme dans l'enceinte de confinement d'une centrale nucléaire.

30. Utilisation suivant la revendication 29, caractérisée en ce qu'une mutiplicité de dispositifs à l'intérieur de l'enceinte de confinement d'une centrale nucléaire est montée de manière répartie en réseau, sur un nombre correspondants de lieux de fixation, au-dessus de la partie de paroi et / ou de fond de l'enceinte de confinement.

FIG 1

FIG 4

FIG 2

FIG 3

FIG 5

FIG 6

FIG 7

EP 0 527 968 B1

FIG 8

| 1 | 2 | 3 | 4 | 5 |
|---|---|---|---|---|
| Zeit (min) | $CH_2$ (Vol.-%) | $VH_2$ (l/min) | $CH_2$ (Vol.-%) | $V_{Gas}$ (l/min) |
| 0 | 2,10 | | | |
| | | 0,175 | 1,925 | 9,09 |
| 1 | 1,75 | | | |
| | | 0,175 | 1,575 | 11,11 |
| 2 | 1,40 | | | |
| | | 0,150 | 1,250 | 12,00 |
| 3 | 1,10 | | | |
| | | 0,125 | 0,975 | 12,82 |
| 4 | 0,85 | | | |
| | | 0,075 | 0,775 | 9,68 |
| 5 | 0,70 | | | |
| | | 0,050 | 0,650 | 7,69 |
| 6 | 0,60 | | | |
| | | 0,050 | 0,550 | 9,09 |
| 7 | 0,50 | | | |

FIG 9

22

FIG 12

FIG 10

| Versuchs Nummer | Falten-Abstand | Kat-Höhe | Schacht-Höhe | Korr. Zeit-konstante | T-Max Schacht | T-max Kat. | relative Kat.-Fläche |
|---|---|---|---|---|---|---|---|
| V 1.1.1 | 60 mm | 75 mm | 400 mm | 31,33 min | 80°C | 436 °C | 1 |
| V 1.1.2 | 60 mm | 75 mm | 600 mm | 30,00 min | 70°C | 436 °C | 1 |
| V 1.1.3 | 60 mm | 75 mm | 800 mm | 29,00 min | 68°C | 408 °C | 1 |
| V 2.1.1 | 40 mm | 75 mm | 400 mm | 20,00 min | 66°C | 440 °C | 1,5 |
| V 2.1.1 a | 40 mm | 75 mm | 400 mm | 20,22 min | 124°C | 496 °C | 1,5 |
| V 2.2.1 | 40 mm | 150 mm | 400 mm | 13,11 min | 98°C | 280 °C | 3 |
| V 2.2.1 a | 40 mm | 150 mm | 400 mm | 10,98 min | 130°C | 444 °C | 3 |
| V 2.2.1 b | 40 mm | 150 mm | 400 mm | 10,89 min | 154°C | 438 °C | 3 |
| V 2.3.1 | 40 mm | 225 mm | 400 mm | 12,22 min | 182°C | 468 °C | 4,5 |
| V 2.3.1 a | 40 mm | 225 mm | 400 mm | 8,89 min | 160°C | 476 °C | 4,5 |
| V 2.3.3 | 40 mm | 225 mm | 800 mm | 6,67 min | 142°C | 426 °C | 4,5 |
| V 3.1.1 | 20 mm | 75 mm | 400 mm | 11,67 min | 104°C | 484 °C | 3 |
| V 3.1.3 | 20 mm | 75 mm | 800 mm | 9,11 min | 145°C | 428 °C | 3 |
| V 3.2.1 | 20 mm | 150 mm | 400 mm | 7,11 min | 188°C | 500 °C | 6 |
| V 3.2.1 a | 20 mm | 150 mm | 400 mm | 7,11 min | 196°C | 528 °C | 6 |
| V 3.2.3 | 20 mm | 150 mm | 800 mm | 5,33 min | 172°C | 434 °C | 6 |
| V 3.3.1 | 20 mm | 225 mm | 400 mm | 7,56 min | 196°C | 474 °C | 9 |

FIG 11